# EUROPEAN PATENT APPLICATION

(11) **EP 3 148 108 A1**
(43) Date of publication of application: **29.03.2017**
(21) Application number: 14894518.1
(22) Date of filing: 20.10.2014
(51) Int. Cl.: H04L 5/00

(54) **UNLICENSED CARRIER SCHEDULING METHOD, DEVICE AND SYSTEM, AND COMPUTER STORAGE MEDIUM**

(30) Priority: 13.06.2014 CN 201410264391
(71) Applicant: ZTE Corporation, Shenzhen, Guangdong 518057 (CN)
(72) Inventor: HAN, Xiaogang, Shenzhen Guangdong 518057 (CN); XIA, Shuqiang, Shenzhen Guangdong 518057 (CN); GOU, Wei, Shenzhen Guangdong 518057 (CN); ZHAO, Yajun, Shenzhen Guangdong 518057 (CN)
(74) Representative: Awapatent AB
(86) International application number: PCT/CN2014/088980
(87) International publication number: WO 2015/188557

(57) **Abstract**

The present invention discloses a method of scheduling an unlicensed carrier, in which a base station transmits signaling of scheduling termination and/or signaling of scheduling update in a licensed carrier when determining that the signaling for indicating a scheduling termination and/or the signaling for indicating a scheduling update need to be transmitted; and the UE receives the signaling of scheduling termination and/or the signaling of scheduling update in the licensed carrier, and terminates data transmission in a starting scheduling resource location according to the signaling of scheduling termination, and/or transmits data in a new scheduling resource location according to the signaling of scheduling update. The present invention further discloses a device and system of scheduling an unlicensed carrier and a computer storage medium.

## Description

### Technical Field

The present invention relates to wireless communication technology, and in particular, to a method, device and system for scheduling an unlicensed carrier, and a computer storage medium.

### Background of the Related Art

Up to now, it is known that Long Term Evolution (LTE) is deployed to operate in a licensed carrier. However, with the evolution of the LTE, the project of deployment of the LTE in an unlicensed carrier also needs to be studied.

The unlicensed carrier has the following characteristics:
1. Free of charge/low cost: there is no need to purchase an unlicensed spectrum, and the cost of spectrum resources is zero.
2. Low requirements for admission and low cost: individuals and businesses can participate in the deployment, and devices of equipment manufacturers can be deployed randomly.
3. Sharing of resources: when a number of different systems operate therein, or different operators of the same system operate therein, a number of ways to share resources can be considered to improve spectral efficiency.
4. A lot of wireless access technologies: different communication standards can be used, but it is difficult to collaborate, and there are a variety of network topologies.
5. A lot of wireless access sites: there is a number of users, but it is difficult to collaborate, and centralized management needs a large overhead.
6. A lot of applications: a variety of businesses can operate therein, for example, Machine to Machine (M2M) businesses and Vehicle to Vehicle (V2V) businesses.

The above characteristics determine that the unlicensed carrier may be an important evolution direction for wireless communication systems. However, there are also many problems, for example, there will be a variety of wireless systems in the unlicensed carrier, it is difficult to coordinate with each other, and there is serious interference.

At present, the use of unlicensed carriers in the LTE is mainly based on a Carrier Aggregation (CA) mode and a Dual Connectivity (DC) mode. When operating in a carrier aggregation mode, the LTE licensed carrier acts as a primary carrier, and the unlicensed carrier acts as a secondary carrier. There are two modes of the unlicensed carrier as the secondary carrier, SDL and TDD. In the SDL mode, the unlicensed carrier acts as a downlink carrier for only transmitting data, and in the TDD mode, the unlicensed carrier operates in the TDD mode (both uplink transmission and downlink transmission).

When the TDD mode is used as the mode of the unlicensed carrier, it is assumed that uplink transmission is performed in the unlicensed carrier by cross-carrier scheduling from an LTE licensed carrier in subframe n, i.e., the uplink transmission time of the unlicensed carrier is n+k. When a Listening Before Transmission (LBT) mechanism is used for occupation of Unlicensed carrier (U carrier) resources, if an eNB does not successfully preempt the U resources at the time close to n+k, the possible reasons comprise: a problem that a scheduling timing of the unlicensed carrier does not match a carrier occupation time since regression of a main system causes the base station to release the resources which are acquired currently by competition, another strong interference system causes the base station to release the resources which are acquired by competition due to reduction in reliability of the transmission etc. If the UE still performs transmission in the unlicensed carrier according to the original scheduling timing, in consideration that devices of other systems perform transmission in the same unlicensed carrier, the performance of data transmission of the UE in the Physical Uplink Shared Channel (PUSCH) at time n+k may be affected, and at the same time the performance of data transmission of the devices of other systems may be reduced.

In addition, according to the regulations of the existing Hybrid Automatic repeat Request (HARQ) protocol, the first transmission and retransmission of the data need to be performed on the same carrier. Assuming that it is successful to compete for the unlicensed carrier at time n+k using the LBT, the UE transmits data using the unlicensed carrier at time n+k. However, the data is erroneous due to the influence of the channel, and the UE needs to retransmit the data at a predefined HARQ timing, for example, retransmits the data at subframe n+k+m. In this case, if it is unsuccessful to compete for the unlicensed carrier at the subframe n+k+m using the LBT mechanism, the above mentioned problem that the scheduling timing of the unlicensed carrier does not match the carrier occupation time may also occur.

It should be considered that when the LTE system and other wireless systems commonly operate in the unlicensed carrier, fairness is important guarantee to ensure harmonious coexistence therebetween, and fairness is mainly reflected in that various wireless access technologies should not affect the spectrum requirements and service performance of the other wireless access technologies.

In conclusion, in order to ensure harmonious coexistence between the LTE system and other wireless systems in the unlicensed spectrum, there is a need to address the above technical problems.

### Summary of the Invention

In order to solve the existing technical problem, the embodiments of the present invention primarily provide a method, device and system for scheduling an unlicensed carrier, and a computer storage medium.

The technical solutions according to the embodiments of the present invention are achieved as follows.

A method for scheduling an unlicensed carrier according to an embodiment of the present invention includes:
a base station transmitting a signaling for indicating a scheduling termination and/or a signaling for indicating a scheduling update in a licensed carrier when determining that the signaling for indicating a scheduling termination and/or the signaling for indicating a scheduling update need to be transmitted.

In a specific embodiment, transmitting the signaling for indicating a scheduling termination and/or signaling for indicating a scheduling update in a licensed carrier includes: the base station transmitting the information indicating scheduling termination and/or an offset value relative to a starting scheduling resource location to a User Equipment (UE) through physical layer Downlink Control Information (DCI).

In a specific embodiment, transmitting the signaling for indicating a scheduling termination and/or signaling for indicating a scheduling update in a licensed carrier includes: the base station transmitting the information indicating scheduling termination and/or information of a new unlicensed carrier selected from a set of candidate unlicensed carriers to a UE through physical layer Downlink Control Information (DCI).

In a specific embodiment, transmitting the signaling for indicating a scheduling termination and/or signaling for indicating a scheduling update in a licensed carrier includes: the base station transmitting an indication of scheduling termination and/or signaling for indicating a scheduling update to a UE in the licensed carrier through a scheduling termination channel.

In a specific embodiment, determining that the signaling for indicating a scheduling termination and/or the signaling for indicating a scheduling update need to be transmitted includes: the base station determining that the signaling for indicating a scheduling termination and/or the signaling for indicating a scheduling update need to be transmitted by determining that an unlicensed carrier scheduling timing does not match a carrier occupation time.

In a specific embodiment, the base station transmitting the information indicating scheduling termination through physical layer DCI includes: the base station indicating scheduling termination using a reserved bit state of a Carrier Indicator Field (CIF) in the DCI, or indicating scheduling termination in a bitmap manner, or indicating scheduling termination by setting a dedicated bit in the DCI.

In a specific embodiment, the base station transmitting the information indicating scheduling termination through physical layer DCI includes: for a situation where the base station continuously transmits a plurality of uplink grants (UL grants) of the UE in the time domain, defining an indication whether a scheduling process is valid in a bitmap manner in the physical layer DCI, and the base station indicating an invalid scheduling process in the licensed carrier in a bitmap manner through the physical layer DCI; or the base station presetting a pattern relationship between different processes and different transmission times of the physical layer DCI, and the base station transmitting physical layer DCI at a time corresponding to a process according to the pattern relationship to indicate that the process is invalid.

In a specific embodiment, the base station transmitting an indication of scheduling termination and/or an offset value relative to a starting scheduling resource location through physical layer DCI includes: the base station transmitting the indication of scheduling termination and/or the offset value relative to the starting scheduling resource location in the licensed carrier in a first subframe after preemption of unlicensed carrier resources is unsuccessful; or the base station transmitting the indication of scheduling termination and/or the offset value relative to the starting scheduling resource location in the licensed carrier in a predefined subframe corresponding to a UE process.

In a specific embodiment, the base station transmitting an offset value relative to a starting scheduling resource location to the UE through physical layer DCI includes: the base station pre-establishing a mapping pattern between offset values and reserved bit states of CIF bit fields, and indicating the offset value through a reserved bit state of a CIF bit field in the DCI or indicating the offset value in a bitmap manner.

In a specific embodiment, the base station transmitting the information indicating scheduling termination to the UE through physical layer DCI includes: the base station indicating termination of scheduling of an original carrier using a reserved bit state of a CIF bit field in the DCI, or indicating termination of scheduling of an original carrier by setting a dedicated bit in the DCI, or indicating termination of scheduling of an original carrier by scrambling the DCI with an appointed RNTI.

In a specific embodiment, the set of candidate unlicensed carriers is in a UE specific form or a cell-specific form.

In a specific embodiment, the base station transmitting information of a new unlicensed carrier selected from a set of candidate unlicensed carriers to the UE through the physical layer DCI includes: the base station describing the new unlicensed carrier in a bitmap manner or indicating a new unlicensed carrier using a reserved bit state of a CIF bit field in the DCI.

In a specific embodiment, the base station transmitting the information indicating scheduling termination to the UE through the physical layer DCI includes: defining an indication whether a scheduling process is valid in a bitmap form in the physical layer DCI, and the base station indicating an invalid scheduling process in the licensed carrier in a bitmap manner through the physical layer DCI; or the base station presetting a pattern relationship between different processes and different transmission times of the physical layer DCI, and the base station transmitting physical layer DCI at a time corresponding to a process according to the pattern relationship to indicate that the process is invalid.

In a specific embodiment, the base station transmitting the information indicating scheduling termination and/or the information of a new unlicensed carrier selected from a set of candidate unlicensed carriers to the UE through the physical layer DCI includes: the base station transmitting the information indicating scheduling termination and/or the information of the new unlicensed carrier selected from the set of candidate unlicensed carriers in the licensed carrier in a first subframe after preemption of unlicensed carrier resources is unsuccessful; or the base station transmitting the information indicating scheduling termination and/or the information of the new unlicensed carrier selected from the set of candidate unlicensed carriers in the licensed carrier in a predefined subframe corresponding to a UE process.

In a specific embodiment, the scheduling termination channel is implemented by reserving Physical Hybrid ARQ Indicator Channel (PHICH) resources or physical layer DCI.

In a specific embodiment, the base station transmitting an indication of scheduling termination and/or signaling for indicating a scheduling update to the UE in the licensed carrier through a scheduling termination channel includes: the base station transmitting the indication of scheduling termination and/or the signaling for indicating a scheduling update through a reserved PHICH resource.

In a specific embodiment, the base station transmitting the indication of scheduling termination and/or the signaling for indicating a scheduling update through a reserved PHICH resource includes: the base station transmitting the indication of scheduling termination and/or the signaling for indicating a scheduling update in the licensed carrier in the reserved PHICH resource in a first subframe time after preemption of unlicensed carrier resources is unsuccessful; or the base station transmitting the indication of scheduling termination and/or the signaling for indicating a scheduling update in the licensed carrier in a reserved PHICH resource in a predefined subframe time corresponding to a UE process.

In a specific embodiment, the base station transmitting an indication of scheduling termination and/or signaling for indicating a scheduling update to the UE in the licensed carrier through a scheduling termination channel includes: the base station transmitting the indication of scheduling termination and/or the signaling for indicating a scheduling update through the physical layer DCI in the scheduling termination channel.

In a specific embodiment, the base station transmitting the indication of scheduling termination and/or the signaling for indicating a scheduling update through the physical layer DCI in the scheduling termination channel includes: describing information of an unlicensed carrier in which scheduling is to be terminated and/or a new unlicensed carrier in a bitmap manner; or describing the signaling for indicating a scheduling termination and/or indicating the scheduling update using a reserved bit state of a CIF bit field in the DCI; or describing the signaling for indicating a scheduling termination and/or indicating a scheduling update by setting a dedicated bit in the DCI.

In a specific embodiment, the base station transmitting an indication of scheduling termination to the UE in the licensed carrier through a scheduling termination channel includes: for a situation where the base station continuously transmits a plurality of UL grants of the UE in the time domain, defining an indication whether a scheduling process is valid in a bitmap manner in the physical layer DCI, and the base station indicating an invalid scheduling process in the licensed carrier in a bitmap manner through the physical layer DCI; or the base station presetting a pattern relationship between different processes and different transmission times of the physical layer DCI, and the base station transmitting physical layer DCI at a time corresponding to a process according to the pattern relationship to indicate that the process is invalid.

In a specific embodiment, the base station transmitting an indication of scheduling termination and/or signaling for indicating a scheduling update to the UE in the licensed carrier through a scheduling termination channel includes: the base station transmitting the indication of scheduling termination and/or the signaling for indicating a scheduling update in the licensed carrier in a first subframe after preemption of unlicensed carrier resources is unsuccessful; or the base station transmitting the indication of scheduling termination and/or the signaling for indicating a scheduling update in the licensed carrier in a predefined subframe corresponding to a UE process.

The embodiments of the present invention further provide a method of scheduling an unlicensed carrier, including:
a UE receiving the signaling for indicating a scheduling termination and/or signaling for indicating a scheduling update in a licensed carrier, and terminating data transmission in a starting scheduling resource location according to the signaling for indicating a scheduling termination, and/or transmitting data in a new scheduling resource location according to the signaling for indicating a scheduling update.

In a specific embodiment, the UE receiving the signaling for indicating a scheduling termination and/or signaling for indicating a scheduling update in a licensed carrier includes: the UE acquiring the information indicating scheduling termination and/or an offset value relative to a starting scheduling resource location through physical layer Downlink Control Information (DCI) in the licensed carrier.

In a specific embodiment, the UE receiving the signaling for indicating a scheduling termination and/or signaling for indicating a scheduling update in a licensed carrier includes: the UE determining termination of scheduling of an original carrier and/or acquiring information of a new unlicensed carrier through physical layer DCI in the licensed carrier.

In a specific embodiment, the UE receiving the signaling for indicating a scheduling termination and/or signaling for indicating a scheduling update in a licensed carrier includes: the UE receiving indication of scheduling termination and/or signaling for indicating a scheduling update in a reserved PHICH resource in the licensed carrier by acquiring a parameter of the reserved PHICH resource associated with an unlicensed carrier; or acquiring the indication of scheduling termination and/or signaling for indicating a scheduling update through the physical layer DCI in a scheduling termination channel.

In a specific embodiment, the UE acquiring the information indicating scheduling termination and/or an offset value relative to a starting scheduling resource location through physical layer Downlink Control Information (DCI) in a licensed carrier includes: learning termination of the original scheduling and/or the offset value relative to the starting scheduling resource location according to a reserved bit state of a CIF bit field in the physical layer DCI or according to a dedicated bit set in the physical layer DCI; or
learning termination of the original scheduling and/or the offset value relative to the starting scheduling resource location according to a bitmap mapping relationship predefined in the physical layer DCI.

In a specific embodiment, terminating data transmission in a starting scheduling resource location according to the signaling for indicating a scheduling termination includes: for a situation where the UE corresponds to a plurality of UL grants, the UE processing the received physical layer DCI includes at least one of:
the UE terminating all the corresponding UL grants based on the physical layer DCI indicating scheduling termination;
the UE terminating a UL grant of a corresponding process based on an indication of a bit in the physical layer DCI; and
the UE receiving the physical layer DCI at a corresponding time based on a preset pattern relationship between processes and reception times of the physical layer DCI, and determining termination of a UL grant of a corresponding process based on the physical layer DCI.

In a specific embodiment, the UE acquiring the information indicating scheduling termination and/or an offset value relative to a starting scheduling resource location through physical layer DCI in a licensed carrier includes: the UE monitoring an indication of scheduling termination and/or the offset value relative to the starting scheduling resource location during a period of time from a time when a resource grant is acquired to a transmission time determined according to a starting scheduling resource; or the UE monitoring the indication of scheduling termination and/or the offset value relative to the starting scheduling resource location in a corresponding subframe based on a predefined pattern relationship between processes and reception times of signaling.

In a specific embodiment, the UE determining termination of scheduling of an original carrier and/or acquiring information of a new unlicensed carrier through physical layer DCI in the licensed carrier includes: the UE determining termination of scheduling of an original carrier and/or acquiring information of a new unlicensed carrier in a bitmap manner of the physical layer DCI in a common search space using an appointed RNTI; or
the UE determining termination of scheduling of an original unlicensed carrier and/or acquiring information of a new unlicensed carrier through an indication of a reserved bit state of a CIF bit field in the physical layer DCI in a common search space using an appointed RNTI; or
the UE determining termination of scheduling of an original unlicensed carrier through an indication of a reserved bit state of a CIF field in the physical layer DCI and/or acquiring information of a new unlicensed carrier in a bitmap manner of the physical layer DCI in a common search space using an appointed RNTI; or
the UE determining termination of scheduling of an original unlicensed carrier through an indication of a reserved bit state of a CIF field in the physical layer DCI and/or acquiring information of a new unlicensed carrier in a bitmap manner of the physical layer DCI in a dedicated search space using a C-RNTI.

In a specific embodiment, terminating data transmission in a starting scheduling resource location according to the signaling for indicating a scheduling termination includes: for a situation where the UE corresponds to a plurality of UL grants, the UE processing the received physical layer DCI includes at least one of:
the UE terminating all the corresponding UL grants based on the physical layer DCI indicating termination of scheduling of an original carrier;
the UE terminating a UL grant of a corresponding process based on an indication of a bit in the physical layer DCI; and
the UE receiving the physical layer DCI at a corresponding time based on a preset pattern relationship between processes and reception times of the physical layer DCI, and determining termination of a UL grant of a corresponding process based on the physical layer DCI.

In a specific embodiment, the UE determining termination of scheduling of an original carrier and/or acquiring information of a new unlicensed carrier through physical layer DCI in the licensed carrier includes: the UE monitoring the information indicating scheduling termination and/or information of a new unlicensed carrier selected from a set of candidate unlicensed carriers during a period of time from a time when a resource grant is acquired to a transmission time determined according to a starting scheduling resource; or the UE monitoring the information indicating scheduling termination and/or information of a new unlicensed carrier selected from a set of candidate unlicensed carriers in a corresponding subframe based on a predefined pattern relationship between processes and reception times of signaling.

In a specific embodiment, terminating data transmission in a starting scheduling resource location according to the signaling for indicating a scheduling termination includes: for a situation where the UE corresponds to a plurality of UL grants, the UE processing the received physical layer DCI indicating scheduling termination includes at least one of:
the UE terminating all the corresponding UL grants based on the physical layer DCI indicating scheduling termination;
the UE terminating a UL grant of a corresponding process based on an indication of a bit in the physical layer DCI; and
the UE receiving physical layer DCI at a corresponding time based on a preset pattern relationship between processes and reception times of the physical layer DCI, and determining termination of a UL grant of a corresponding process based on the physical layer DCI.

In a specific embodiment, terminating data transmission in a starting scheduling resource location according to the signaling for indicating a scheduling termination includes: for a situation where the UE corresponds to a plurality of UL grants and an indication of scheduling termination is received through a reserved PHICH resource, the UE processing the received reserved PHICH resource includes at least one of:
the UE terminating all the corresponding UL grants based on the reserved PHICH resource indicating scheduling termination;
the UE terminating a UL grant of a corresponding process based on an indication of a bit in the reserved PHICH resource; and
the UE receiving a corresponding PHICH at a corresponding time based on a preset pattern relationship between processes and reception times of reserved PHICH resources, and determining termination of a UL grant of a corresponding process based on an indication of the PHICH.

In a specific embodiment, the UE receiving the signaling for indicating a scheduling termination and/or signaling for indicating a scheduling update in a licensed carrier includes: the UE monitoring the indication of scheduling termination and/or the signaling for indicating a scheduling update during a period of time from a time when a resource grant is acquired to a transmission time determined according to a starting scheduling resource; or the UE monitoring the indication of scheduling termination and/or the signaling for indicating a scheduling update in a corresponding subframe based on a predefined pattern relationship between processes and reception times of signaling.

The embodiments of the present invention further provide a method of scheduling an unlicensed carrier, including:
a base station transmitting the signaling for indicating a scheduling termination and/or signaling for indicating a scheduling update in a licensed carrier when determining that the signaling for indicating a scheduling termination and/or the signaling for indicating a scheduling update need to be transmitted; and
the UE receiving the signaling for indicating a scheduling termination and/or the signaling for indicating a scheduling update in the licensed carrier, and terminating data transmission in a starting scheduling resource location according to the signaling for indicating a scheduling termination, and/or transmitting data in a new scheduling resource location according to the signaling for indicating a scheduling update.

The embodiments of the present invention correspondingly provide a base station, including: a determination module, and a signaling transmission module, herein
the determination module is configured to determine that the signaling for indicating a scheduling termination and/or the signaling for indicating a scheduling update need to be transmitted, and notify the signaling transmission module; and
the signaling transmission module is configured to transmit the signaling for indicating a scheduling termination and/or signaling for indicating a scheduling update in a licensed carrier.

In a specific embodiment, the signaling transmission module is further configured to transmit the information indicating scheduling termination and/or the offset value relative to the starting scheduling resource location to a User Equipment (UE) in the licensed carrier; or
the signaling transmission module is further configured to select a new unlicensed carrier from a set of candidate unlicensed carriers as a carrier scheduled for the UE, and transmit the information indicating scheduling termination and/or the information of the new unlicensed carrier selected from the set of candidate unlicensed carriers to the UE in the licensed carrier; or
the signaling transmission module is further configured to transmit the indication of scheduling termination and/or signaling for indicating a scheduling update to the UE through a scheduling termination channel in the licensed carrier.

The embodiments of the present invention correspondingly provide a UE, including: a signaling reception module and a signaling processing module; herein
the signaling reception module is configured to receive the signaling for indicating a scheduling termination and/or signaling for indicating a scheduling update in a licensed carrier, and transmit the signaling for indicating a scheduling termination and/or signaling for indicating a scheduling update to the signaling processing module; and
the signaling processing module is configured to terminate data transmission in a starting scheduling resource location according to the signaling for indicating a scheduling termination and/or to transmit data in a new scheduling resource location according to the signaling for indicating a scheduling update.

In a specific embodiment, the signaling reception module is further configured to acquire information indicating scheduling termination and/or an offset value relative to a starting scheduling resource location in a licensed carrier through physical layer DCI, or
the signaling reception module is further configured to determine termination of scheduling of an original carrier and/or acquire information of a new unlicensed carrier in the licensed carrier through the physical layer DCI; or
the signaling reception module is further configured to receive indication of scheduling termination and/or signaling for indicating a scheduling update in a reserved PHICH resource in the licensed carrier by acquiring a parameter of the reserved PHICH resource associated with an unlicensed carrier; or acquire the indication of scheduling termination and/or signaling for indicating a scheduling update through the physical layer DCI in a scheduling termination channel.

The embodiments of the present invention further correspondingly provide a system of scheduling an unlicensed carrier, including: a base station, and a UE, herein
the base station is configured to transmit the signaling for indicating a scheduling termination and/or signaling for indicating a scheduling update in a licensed carrier when determining that the signaling for indicating a scheduling termination and/or the signaling for indicating a scheduling update need to be transmitted; and
the UE is configured to receive the signaling for indicating a scheduling termination and/or the signaling for indicating a scheduling update in the licensed carrier, and terminate data transmission in a starting scheduling resource location according to the signaling for indicating a scheduling termination, and/or transmit data in a new scheduling resource location according to the signaling for indicating a scheduling update.

The embodiments of the present invention correspondingly provide a computer storage medium having stored therein computer-executable instructions for performing the method described above.

The embodiments of the present invention provide a method, device and system for scheduling an unlicensed carrier and a computer storage medium in which a base station transmits signaling of scheduling termination and/or signaling of scheduling update in a licensed carrier when determining that the signaling for indicating a scheduling termination and/or the signaling for indicating a scheduling update need to be transmitted; and a UE receives the signaling of scheduling termination and/or the signaling of scheduling update in the licensed carrier, and terminates data transmission in a starting scheduling resource location according to the signaling of scheduling termination, and/or transmits data in a new scheduling resource location according to the signaling of scheduling update. Thereby, this avoids data transmission of the UE in a channel with a poor channel environment and also avoids the influence on data transmission of other systems, thereby improving the reliability of scheduling data in the unlicensed carrier.

### Brief Description of Drawings

Fig. 1 is a flowchart of a method of scheduling an unlicensed carrier at a base station side according to an embodiment of the present invention;
Fig. 2 is a flowchart of a method of scheduling an unlicensed carrier at a UE side according to an embodiment of the present invention;
Fig. 3 is an overall flowchart of a method of scheduling an unlicensed carrier according to an embodiment of the present invention;
Fig. 4 is a structural diagram of a base station according to an embodiment of the present invention;
Fig. 5 is a structural diagram of a UE according to an embodiment of the present invention; and
Fig. 6 is a structural diagram of a system of scheduling an unlicensed carrier according to an embodiment of the present invention.

### Preferred Embodiments of the Present Invention

In the embodiments of the present invention, a base station transmits the signaling for indicating a scheduling termination and/or signaling for indicating a scheduling update in a licensed carrier when determining that the signaling for indicating a scheduling termination and/or the signaling for indicating a scheduling update need to be transmitted; and a UE receives the signaling for indicating a scheduling termination and/or the signaling for indicating a scheduling update in the licensed carrier, and terminates data transmission in a starting scheduling resource location according to the signaling for indicating a scheduling termination, and/or transmits data in a new scheduling resource location according to the signaling for indicating a scheduling update.

The present invention will be further described in detail below with reference to the accompanying drawings and specific embodiments.

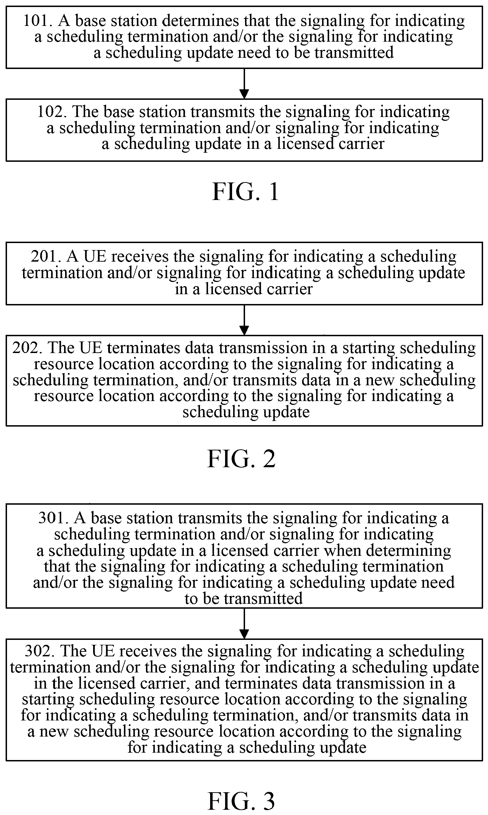

The embodiments of the present invention realize a method of scheduling an unlicensed carrier, as shown in Fig. 1, which includes the following several steps.

In step 101, a base station determines that the signaling for indicating a scheduling termination and/or the signaling for indicating a scheduling update need to be transmitted.

Specifically, the base station determines that the signaling for indicating a scheduling termination and/or the signaling for indicating a scheduling update need to be transmitted by determining that a scheduling timing of the unlicensed carrier does not match a carrier occupation time; herein
determining that a scheduling timing of the unlicensed carrier does not match a carrier occupation time includes: the base station transmitting a resource grant of the unlicensed carrier on the premise that the unlicensed carrier is successfully occupied, but the base station finding that the unlicensed carrier is no longer occupied by itself (including regression of a main system causes the base station to release the resources which are acquired currently by competition, and another strong interference system causes the base station to release the resources which are acquired by competition due to reduction in reliability of the transmission) at the scheduling timing time of the unlicensed carrier (or before the scheduling timing time); or the base station transmitting information of a resource grant of the unlicensed carrier which is planned to be occupied but the base station finding that the unlicensed carrier cannot be occupied by itself at the scheduling timing time of the unlicensed carrier (or before the scheduling timing time).

In step 102, the base station transmits the signaling for indicating a scheduling termination and/or signaling for indicating a scheduling update in a licensed carrier.

Specifically, the base station transmits information indicating scheduling termination and/or an offset value relative to a starting scheduling resource location to the UE in the licensed carrier, herein the offset value is preset by the base station. For example, the base station transmits a resource grant of the unlicensed carrier at time n, and the scheduling timing of the unlicensed carrier (also called the original scheduling resource location) is subframe n+k, herein both n and k are positive integers. If the base station does not successfully compete for resources (including that regression of a main system causes the base station to release the resources which are acquired currently by competition, and another strong interference system causes the base station to release the resources which are acquired by competition due to reduction in reliability of the transmission, which are described as not successfully completing for resources below) in a sub frame close to n+k (the sub frame close to n+k is sub frame n+k-j, where j is an integer greater than or equal to 1), i.e., the scheduling timing of the unlicensed carrier does not match the carrier occupation time, the base station transmits information indicating scheduling termination and/or the offset value relative to a starting scheduling resource location to the UE in the licensed carrier. For example, the offset of the new scheduling resource location relative to the starting scheduling resource location is m, and then the UE performs data transmission at subframe n+k+m.

The base station may transmit information indicating scheduling termination and/or an offset value relative to a starting scheduling resource location to a UE through physical layer signaling. For example, the base station transmits the information indicating scheduling termination and/or the offset value relative to the starting scheduling resource location to the UE through physical layer Downlink Control Information (DCI).

Thus, the base station transmitting the information indicating scheduling termination through physical layer DCI may comprise: the base station indicating scheduling termination using a reserved bit state of a Carrier Indicator Field (CIF) in the DCI, or indicating scheduling termination in a bitmap manner, or indicating scheduling termination by setting a dedicated bit in the DCI.

For a situation where the base station continuously transmits a plurality of UL grants of the UE in the time domain, an indication whether a scheduling process is valid is defined in a bitmap manner in the physical layer DCI, and the base station indicates an invalid scheduling process in the licensed carrier in a bitmap manner through the physical layer DCI; or the base station may preset a pattern relationship between different processes and different transmission times of the physical layer DCI, and the base station transmits physical layer DCI at a time corresponding to a process according to the pattern relationship to indicate that the process is invalid.

The base station transmits an indication of scheduling termination and/or an offset value relative to a starting scheduling resource location in the licensed carrier at a specified time. Preferably, the base station is appointed to transmit the indication of scheduling termination and/or the offset value relative to the starting scheduling resource location in the licensed carrier in a first subframe after preemption of unlicensed carrier resources is unsuccessful; or the base station is appointed to transmit the indication of scheduling termination and/or the offset value relative to the starting scheduling resource location in the licensed carrier in a predefined subframe corresponding to a UE process.

The base station transmitting an offset value relative to a starting scheduling resource location to the UE through physical layer DCI may comprise: the base station pre-establishing a mapping pattern between offset values and bit states, and indicating the offset value through a bit state in the DCI or indicating the offset value in a bitmap manner. Preferably, the offset value may be indicated using a reserved bit state of a CIF bit field.

There are two different cases of synchronous HARQ and asynchronous HARQ for the offset value. For the synchronous HARQ case, the offset value satisfying at least one of: being a multiple of 4, being n+4+10*N (where N is an integer greater than or equal to 0), being n+7+10*N (where N is an integer greater than or equal to 0), and being n+6+10*N (where N is an integer greater than or equal to 0). For the asynchronous HARQ case, the offset value is M (where M is an integer greater than or equal to 1), and when the offset value is transmitted in the asynchronous HARQ case, additional bits are further required to indicate a process number at a new scheduling timing acquired by the offset value, and the additional bits can be carried through physical layer signaling in a bitmap manner.

Alternatively, the base station selects a new unlicensed carrier from a set of candidate unlicensed carriers as a carrier scheduled for the UE and transmits the information indicating scheduling termination and/or information of the new unlicensed carrier selected from the set of candidate unlicensed carriers to the UE in the licensed carrier. For example, the base station transmits a resource grant of the unlicensed carrier at time n, and the scheduling timing of the unlicensed carrier (also called the original scheduling resource location) is subframe n+k, and is on the unlicensed carrier c1. If the base station does not successfully compete for the resource c1 in a subframe close to n+k (a subframe close to n+k is subframe n+k-j, where j is an integer greater than or equal to 1), i.e., the scheduling timing of the unlicensed carrier does not match the carrier occupation time, the base station selects an unlicensed carrier c2 from the set of unlicensed carriers as a new scheduled carrier, and transmits information indicating scheduling termination and/or information of the unlicensed carrier c2 to the UE in the licensed carrier. The UE transmits data in the unlicensed carrier c2 in the scheduling resource location n+k.

Specifically, the base station transmitting the information indicating scheduling termination to the UE may comprise: the base station indicating termination of scheduling of an original carrier to the UE through physical layer DCI. Preferably, the base station indicates termination of scheduling of an original carrier using a reserved bit state of a CIF bit field in the DCI, or indicates termination of scheduling of an original carrier by setting a dedicated bit in the DCI, or indicates termination of scheduling of an original carrier by scrambling the physical layer signaling with an appointed RNTI.

The set of candidate unlicensed carriers is in a UE-specific form or in a cell-specific form. The candidate unlicensed carriers in the set of candidate unlicensed carriers are selected based on a measurement result of the base station or the UE or other principles. For example, the base station selects an appropriate unlicensed carrier as a candidate unlicensed carrier based on its own measurement result for the unlicensed carrier. In this case, all the UEs have the same set of candidate unlicensed carriers, and the set of candidate unlicensed carriers which is configured in such manner is in a cell-specific form. On the contrary, if a suitable set of candidate unlicensed carriers is configured for the UE based on the measurement result of the unlicensed carrier fed back by the UE, the set of candidate unlicensed carriers is in a UE-specific form.

Here, the measurement of the unlicensed carrier by the base station or the UE includes a linear average of the energy observed by the base station or the UE on a given bandwidth of the unlicensed carrier within a given observation time, where the observed energy comes from other cells which are at the same frequency as that of the unlicensed carrier cell, and/or sites belonging to a different system from that of the base station, and/or energy which is leaked to a current band from bands adjacent to the unlicensed carrier, and/or energy generated by thermal noise. Further, the given observation time is preferably a single or multiple OFDM symbols, and a given bandwidth of the unlicensed carrier is preferably a full bandwidth.

Alternatively, the base station informs the information of the new unlicensed carrier to the UE through the physical layer DCI, herein when the base station configures the new unlicensed carrier for all the UEs scheduled on the initial carrier, the new unlicensed carrier may be described in a bitmap manner, and a format which is easy for blind-retrieval is selected in principle as the DCI format to be used. For example, a number of bits corresponding to the DCI format is unique. It may be the case that first M bits (herein M is greater than or equal to 1) of the predefined DCI format carry the information of the new unlicensed carrier, and a mapping relationship between candidate unlicensed carriers in the set of candidate unlicensed carriers and the first M bits of the predefined DCI format is predefined. For example, assuming that M is equal to 5, carrier C1 is represented by 00001, carrier C2 is represented by 00010, carrier C3 is represented by 00100, and the value of M in the predefined DCI format may be modified based on a variation in the number of candidate unlicensed carriers.

In addition, the base station may also indicate termination of scheduling of an original unlicensed carrier by scrambling the DCI with an appointed RNTI, and indicate a new unlicensed carrier using a reserved bit state of a CIF bit field in the DCI, or indicate termination of scheduling of an original unlicensed carrier using a reserved bit state of a CIF bit field in the DCI, and select first M bits (herein M is greater than or equal to 1) in the DCI to describe a new unlicensed carrier in a bitmap manner. Herein, the DCI information is scrambled with an appointed RNTI, and is transmitted in a PDCCH or ePDCCH common search space, or transmitted in an appointed resource. Herein, when the new unlicensed carrier is described in a bitmap manner, the original unlicensed carrier can be simultaneously described for indicating termination of scheduling of the original unlicensed carrier.

When the set of candidate unlicensed carriers is in a UE-specific manner, the DCI may be scrambled with a C-RNTI allocated by the UE. In this case, the CIF bit field in the DCI is a reserved bit state, and CIF bit state 101 is predefined to represent termination of scheduling of the original unlicensed carrier, the new unlicensed carrier is described in a bitmap manner, and the DCI information is transmitted in a PDCCH or ePDCCH dedicated search space, or is transmitted in an appointed resource.

For a situation where the base station continuously transmits a plurality of UL grants of the UE in the time domain, an indication whether a scheduling process is valid is defined in a bitmap manner in the physical layer DCI, and the base station indicates an invalid scheduling process in the licensed carrier in a bitmap manner through the physical layer DCI; or the base station presets a pattern relationship between different processes and different transmission times of the physical layer DCI, and the base station transmits physical layer DCI at a time corresponding to a process according to the pattern relationship to indicate that the process is invalid.

Preferably, the base station transmits the information indicating scheduling termination and/or the information of the new unlicensed carrier selected from the set of candidate unlicensed carriers in the licensed carrier in a first subframe after preemption of unlicensed carrier resources is unsuccessful; or the base station transmits the information indicating scheduling termination and/or the information of the new unlicensed carrier selected from the set of candidate unlicensed carriers in the licensed carrier in a predefined subframe corresponding to a UE process.

Alternatively, a scheduling termination channel corresponding to a PDCCH or ePDCCH is preset, and is used to transmit an indication of scheduling termination. The base station transmits the indication of scheduling termination and/or signaling for indicating a scheduling update to the UE in the licensed carrier through the scheduling termination channel.

Specifically, the scheduling termination channel may be implemented by a reserved PHICH resource or physical layer DCI.

Herein, in a first manner, the base station transmits an indication of scheduling termination and/or signaling for indicating a scheduling update through the reserved PHICH resource, and when configuring an unlicensed carrier, the base station configures a parameter of a reserved PHICH resource together with a parameter of an unlicensed carrier and the parameter of the reserved PHICH resource and the unlicensed carrier are configured to have a mapping relationship therebetween;

The base station transmits an indication of scheduling termination and/or signaling for indicating a scheduling update in the licensed carrier at a specified time. Preferably, the base station transmits the indication of scheduling termination and/or the signaling for indicating a scheduling update in the licensed carrier in the reserved PHICH resource in a first subframe time after preemption of unlicensed carrier resources is unsuccessful; or the base station transmits the indication of scheduling termination and/or the signaling for indicating a scheduling update in the licensed carrier in a reserved PHICH resource in a predefined subframe time corresponding to a UE process.

In addition, in a second manner, the base station transmits the indication of scheduling termination and/or signaling for indicating a scheduling update through physical layer DCI in the scheduling termination channel. Here, a format which is easy for blind-retrieval is selected in principle as the DCI to be used. For example, a number of bits corresponding to the DCI format is unique. As another example, when DCI 3A is used, an appointed bit state is set to indicate scheduling termination and/or the signaling for indicating a scheduling update. The DCI may be scrambled with an appointed RNTI, and is transmitted in a PDCCH or ePDCCH common search space or is transmitted in an appointed resource.

Transmitting the indication of scheduling termination and/or the signaling for indicating a scheduling update through the physical layer DCI further includes: describing information of an unlicensed carrier in which scheduling is to be terminated and/or a new unlicensed carrier in a bitmap manner. Here, a format which is easy for blind-retrieval is selected in principle as the DCI to be used. For example, a number of bits corresponding to the DCI format is unique. For example, first M bits (where M is greater than or equal to 1) of the predefined DCI format carry the indication of scheduling termination and/or the information of the new unlicensed carrier, and a mapping relationship between the unlicensed carrier and the M bits is predefined. The DCI may be scrambled with an appointed RNTI to indicate scheduling termination, and is transmitted in a PDCCH or ePDCCH common search space or is transmitted in an appointed resource.

Transmitting the indication of scheduling termination and/or the signaling for indicating a scheduling update through the physical layer DCI further includes: the base station indicating scheduling termination and/or indicating information of a new unlicensed carrier using a reserved bit state of a CIF bit field in the DCI, or indicating scheduling termination and/or signaling for indicating a scheduling update by setting a dedicated bit in the DCI. The DCI may be scrambled with a C-RNTI, and is transmitted in a PDCCH or ePDCCH dedicated search space, or is transmitted in an appointed resource.

For a situation where the base station continuously transmits a plurality of UL grants of the UE in the time domain, an indication whether a scheduling process is valid is defined in a bitmap manner in the physical layer DCI, and the base station indicates an invalid scheduling process in the licensed carrier in a bitmap manner through the physical layer DCI; or the base station presets a pattern relationship between different processes and different transmission times of the physical layer DCI, and the base station transmits physical layer DCI at a time corresponding to a process according to the pattern relationship to indicate that the process is invalid.

Specifically, the base station transmits an indication of scheduling termination and/or signaling for indicating a scheduling update in the licensed carrier at a specified time. Preferably, the base station is appointed to transmit the indication of scheduling termination and/or the signaling for indicating a scheduling update in the licensed carrier in a first subframe after preemption of unlicensed carrier resources is unsuccessful; or the base station is appointed to transmit the indication of scheduling termination and/or the signaling for indicating a scheduling update in the licensed carrier in a predefined subframe corresponding to a UE process.

Specifically, the specific meaning of the indication of scheduling termination transmitted through the scheduling termination channel at least includes terminating the current scheduling and continuing to schedule a carrier if resources are competed for subsequently; or terminating the current scheduling and not continuing to schedule a carrier subsequently.

The embodiments of the present invention further realize a method of scheduling an unlicensed carrier, as shown in Fig. 2, which includes the following several steps.

In step 201, a UE receives the signaling for indicating a scheduling termination and/or signaling for indicating a scheduling update in a licensed carrier, and

In step 202, the UE terminates data transmission in a starting scheduling resource location according to the signaling for indicating a scheduling termination, and/or transmits data in a new scheduling resource location according to the signaling for indicating a scheduling update.

Specifically, the UE acquires the information indicating scheduling termination and/or an offset value relative to a starting scheduling resource location through physical layer DCI in the licensed carrier, terminates data transmission in a starting scheduling resource location based on the information indicating scheduling termination, and/or transmits data in a new scheduling resource location based on the offset value. Preferably, the UE learns termination of the original scheduling and/or the offset value relative to the starting scheduling resource location according to a reserved bit state of a CIF bit field in the physical layer DCI or according to a dedicated bit set in the physical layer DCI; or learns termination of the original scheduling and/or the offset value relative to the starting scheduling resource location according to a bitmap mapping relationship predefined in the physical layer DCI. The UE does not transmit data in the starting scheduling resource location, and transmits data in a new scheduling resource location which is acquired according to the offset value.

Specifically, for a situation where the UE corresponds to a plurality of UL grants, the UE processing the received physical layer DCI includes at least one of:
the UE terminating all the corresponding UL grants based on the physical layer DCI indicating scheduling termination;
the UE terminating a UL grant of a corresponding process based on an indication of a bit in the physical layer DCI; and
the UE receiving the physical layer DCI at a corresponding time based on a preset pattern relationship between processes and reception times of the physical layer DCI, and determining termination of a UL grant of a corresponding process based on the physical layer DCI.

Specifically, the UE monitors the indication of scheduling termination and/or the offset value relative to the starting scheduling resource location in an appointed period of time. Preferably, the UE monitors an indication of scheduling termination and/or the offset value relative to the starting scheduling resource location during a period of time from a time when a resource grant is acquired to a transmission time determined according to a starting scheduling resource; or the UE monitors the indication of scheduling termination and/or the offset value relative to the starting scheduling resource location in a corresponding subframe based on a predefined pattern relationship between processes and reception times of signaling.

Alternatively,
the UE determines termination of scheduling of an original carrier and/or acquire information of a new unlicensed carrier through physical layer DCI in the licensed carrier, and the UE terminates data transmission in an original unlicensed carrier and/or transmits data on a new unlicensed carrier based on the physical layer DCI.

Specifically, for a situation where the UE corresponds to a plurality of UL grants, the UE processing the received physical layer DCI includes at least one of:
the UE terminating all the corresponding UL grants based on the physical layer DCI indicating termination of scheduling of an original carrier;
the UE terminating a UL grant of a corresponding process based on an indication of a bit in the physical layer DCI; and
the UE receiving the physical layer DCI at a corresponding time based on a preset pattern relationship between processes and reception times of the physical layer DCI, and determining termination of a UL grant of a corresponding process based on the physical layer DCI.

Specifically, the UE monitors the information indicating scheduling termination and/or information of a new unlicensed carrier selected from a set of candidate unlicensed carriers in an appointed period of time. Preferably, the UE monitors the information indicating scheduling termination and/or information of a new unlicensed carrier selected from a set of candidate unlicensed carriers during a period of time from a time when a resource grant is acquired to a transmission time determined according to a starting scheduling resource; or the UE monitors the information indicating scheduling termination and/or information of a new unlicensed carrier selected from a set of candidate unlicensed carriers in a corresponding subframe based on a predefined pattern relationship between processes and reception times of signaling.

The manner of the UE determining termination of scheduling of an original carrier through the physical layer DCI includes at least one of correctly parsing the physical layer DCI using an appointed RNTI; displaying a CIF bit field in the physical layer DCI as a reserved state; and indicating a bit of termination of scheduling of the original carrier in the physical layer DCI.

Specifically, the UE determines termination of scheduling of an original carrier and/or acquires information of a new unlicensed carrier in a bitmap manner of the physical layer DCI in a common search space using an appointed RNTI; or the UE determines termination of scheduling of an original unlicensed carrier and/or acquire information of a new unlicensed carrier through an indication of a reserved bit state of a CIF bit field in the physical layer DCI in a common search space using an appointed RNTI; or the UE determines termination of scheduling of an original unlicensed carrier through an indication of a reserved bit state of a CIF field in the physical layer DCI and/or acquire information of a new unlicensed carrier in a bitmap manner of the physical layer DCI in a common search space using an appointed RNTI; or the UE determines termination of scheduling of an original unlicensed carrier through an indication of a reserved bit state of a CIF field in the physical layer DCI and/or acquires information of a new unlicensed carrier in a bitmap manner of the physical layer DCI in a dedicated search space using a C-RNTI.

Here, when the UE transmits data in the new unlicensed carrier, parameters such as a resource location, an MCS, a process number etc. indicated in the original scheduling are reused, or when the base station uses the physical layer DCI to notify the new unlicensed carrier, new transmission parameters are carried, and the UE transmits data in the new unlicensed carrier using the new transmission parameters.

Based on the configuration of the base station, the UE measures carriers in the configured set of candidate unlicensed carriers and reports a measurement result to the base station. Preferably, the base station configures the set of candidate unlicensed carriers in a UE-specific manner.

Alternatively,
the UE receives the indication of scheduling termination and/or the signaling for indicating a scheduling update in the reserved PHICH resource in the licensed carrier by acquiring parameters of the reserved PHICH resource associated with the unlicensed carrier, or acquires the indication of scheduling termination and/or the signaling for indicating a scheduling update in the scheduling termination channel through the physical layer DCI, and the UE terminates data transmission on the corresponding unlicensed carrier in the starting scheduling resource location based on the physical layer DCI.

Specifically, for a situation where the UE corresponds to a plurality of UL grants and the indication of scheduling termination is acquired through physical layer DCI in the scheduling termination channel, the UE processing the received physical layer DCI includes at least one of:
the UE terminating all the corresponding UL grants based on the physical layer DCI indicating scheduling termination;
the UE terminating a UL grant of a corresponding process based on an indication of a bit in the physical layer DCI; and
the UE receiving the physical layer DCI at a corresponding time based on a preset pattern relationship between processes and reception times of the physical layer DCI, and determining termination of a UL grant of a corresponding process based on the physical layer DCI.

Specifically, for a situation where the UE corresponds to a plurality of UL grants and an indication of scheduling termination is received through a reserved PHICH resource, the UE processing the received reserved PHICH resource includes at least one of:
the UE terminating all the corresponding UL grants based on the reserved PHICH resource indicating scheduling termination;
the UE terminating a UL grant of a corresponding process based on an indication of a bit in the reserved PHICH resource; and
the UE receiving a corresponding PHICH at a corresponding time based on a preset pattern relationship between processes and reception times of reserved PHICH resources, and determining termination of a UL grant of a corresponding process based on an indication of the PHICH.

Specifically, the UE monitors an indication of scheduling termination and/or signaling for indicating a scheduling update in an appointed period of time. Preferably, the UE monitors the indication of scheduling termination and/or the signaling for indicating a scheduling update during a period of time from a time when a resource grant is acquired to a transmission time determined according to a starting scheduling resource; or the UE monitors the indication of scheduling termination and/or the signaling for indicating a scheduling update in a corresponding subframe based on a predefined pattern relationship between processes and reception times of signaling.

The UE acquiring an indication of scheduling termination and/or signaling for indicating a scheduling update through the physical layer DCI includes: the UE retrieving corresponding DCI in a PDCCH or ePDCCH common search space using an appointed RNTI, and acquiring the indication of scheduling termination and/or the signaling for indicating a scheduling update based on a parsed result of the DCI.

In addition, the UE receiving an indication of scheduling termination and/or signaling for indicating a scheduling update in the PDCCH or the ePDCCH further includes: retrieving corresponding DCI in a PDCCH or ePDCCH dedicated search space using the C-RNTI, and acquiring the indication of scheduling termination and/or signaling for indicating a scheduling update according to the reserved bit state of the CIF bit field in the parsed DCI.

The embodiments of the present invention further realize a first method of scheduling an unlicensed carrier, as shown in Fig. 3, which includes the following several steps.

In step 301, a base station transmits the signaling for indicating a scheduling termination and/or signaling for indicating a scheduling update in a licensed carrier when determining that the signaling for indicating a scheduling termination and/or the signaling for indicating a scheduling update need to be transmitted; and

In step 302, the UE receives the signaling for indicating a scheduling termination and/or the signaling for indicating a scheduling update in the licensed carrier, and terminates data transmission in a starting scheduling resource location according to the signaling for indicating a scheduling termination, and/or transmits data in a new scheduling resource location according to the signaling for indicating a scheduling update.

Herein, step 301 uses the step of the embodiment illustrated in Fig. 1, and step 302 uses the step of the embodiment illustrated in Fig. 2, which will not be described here repeatedly.

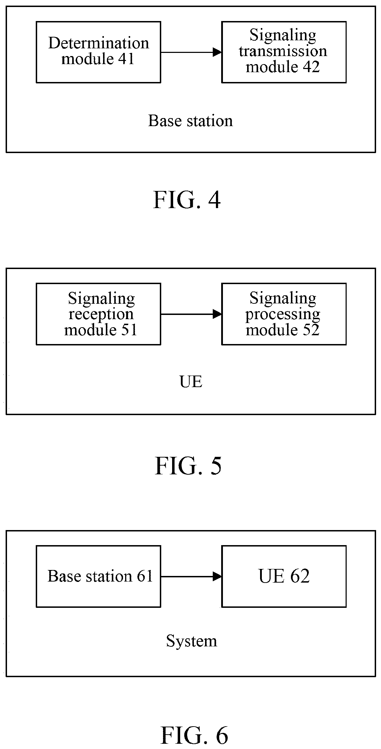

The embodiments of the present invention provide a base station, as shown in Fig. 4, which includes a determination module 41 and a signaling transmission module 42, herein
the determination module 41 determines that the signaling for indicating a scheduling termination and/or the signaling for indicating a scheduling update need to be transmitted, and notifies the signaling transmission module 42; and the signaling transmission module 42 transmits the signaling for indicating a scheduling termination and/or the signaling for indicating a scheduling update in a licensed carrier.

Specifically, the determination module 41 determines that the signaling for indicating a scheduling termination and/or the signaling for indicating a scheduling update need to be transmitted by determining that a scheduling timing of the unlicensed carrier does not match a carrier occupation time; herein determining that a scheduling timing of the unlicensed carrier does not match a carrier occupation time includes: the base station transmitting a resource grant of the unlicensed carrier on the premise that the unlicensed carrier is successfully occupied, but the base station finding that the unlicensed carrier is no longer occupied by itself (including regression of a main system causes the base station to release the resources which are acquired currently by competition, and another strong interference system causes the base station to release the resources which are acquired by competition due to reduction in reliability of the transmission etc) at the scheduling timing time of the unlicensed carrier (or before the scheduling timing time); or the base station transmitting information of a resource grant of the unlicensed carrier which is planned to be occupied but the base station finding that the unlicensed carrier cannot be occupied by itself at the scheduling timing time of the unlicensed carrier (or before the scheduling timing time).

Specifically, the signaling transmission module 42 transmits information indicating scheduling termination and/or an offset value relative to a starting scheduling resource location to the UE in the licensed carrier, herein the offset value is preset by the base station. For example, the base station transmits a resource grant of the unlicensed carrier at time n, and the scheduling timing of the unlicensed carrier (also called the original scheduling resource location) is subframe n+k, herein both n and k are positive integers. If the base station does not successfully compete for resources (including that regression of a main system causes the base station to release the resources which are acquired currently by competition, and another strong interference system causes the base station to release the resources which are acquired by competition due to reduction in reliability of the transmission, which are described as not successfully completing for resources below) in a subframe close to n+k (the subframe close to n+k is subframe n+k-j, where j is an integer greater than or equal to 1), i.e., the scheduling timing of the unlicensed carrier does not match the carrier occupation time, the signaling transmission module 42 transmits information indicating scheduling termination and/or the offset value relative to a starting scheduling resource location to the UE in the licensed carrier. For example, the offset of the new scheduling resource location relative to the starting scheduling resource location is m, and then the UE performs data transmission at subframe n+k+m.

The signaling transmission module 42 may transmit information indicating scheduling termination and/or an offset value relative to a starting scheduling resource location to a UE through physical layer signaling. For example, the signaling transmission module 42 transmits the information indicating scheduling termination and the offset value relative to the starting scheduling resource location to the UE through physical layer Downlink Control Information (DCI).

Thus, the signaling transmission module 42 transmitting the information indicating scheduling termination through physical layer DCI may comprise: the signaling transmission module 42 indicating scheduling termination using a reserved bit state of a Carrier Indicator Field (CIF) in the DCI, or indicating scheduling termination in a bitmap manner, or indicating scheduling termination by setting a dedicated bit in the DCI.

For a situation where the base station continuously transmits a plurality of UL grants of the UE in the time domain, an indication whether a scheduling process is valid is defined in a bitmap manner in the physical layer DCI, and the signaling transmission module 42 indicates an invalid scheduling process in the licensed carrier in a bitmap manner through the physical layer DCI; or the base station presets a pattern relationship between different processes and different transmission times of the physical layer DCI, and the signaling transmission module 42 transmits physical layer DCI at a time corresponding to a process according to the pattern relationship to indicate that the process is invalid.

The signaling transmission module 42 transmits an indication of scheduling termination and/or an offset value relative to a starting scheduling resource location in the licensed carrier at a specified time. Preferably, the signaling transmission module 42 is appointed to transmit the indication of scheduling termination and/or the offset value relative to the starting scheduling resource location in the licensed carrier in a first subframe after preemption of unlicensed carrier resources is unsuccessful; or the signaling transmission module 42 is appointed to transmit the indication of scheduling termination and/or the offset value relative to the starting scheduling resource location in the licensed carrier in a predefined subframe corresponding to a UE process.

The signaling transmission module 42 transmitting an offset value relative to a starting scheduling resource location to the UE through physical layer DCI may comprise: the signaling transmission module 42 pre-establishing a mapping pattern between offset values and bit states, and indicating the offset value through a bit state in the DCI or indicating the offset value in a bitmap manner. Preferably, the offset value may be indicated using a reserved bit state of a CIF bit field.

There are two different cases of synchronous HARQ and asynchronous HARQ for the offset value. For the synchronous HARQ case, the offset value satisfying at least one of: being a multiple of 4, being n+4+10*N (where N is an integer greater than or equal to 0), being n+7+10*N (where N is an integer greater than or equal to 0), and being n+6+10*N (where N is an integer greater than or equal to 0). For the asynchronous HARQ case, the offset value is M (where M is an integer greater than or equal to 1), and when the offset value is transmitted in the asynchronous HARQ case, additional bits are further required to indicate a process number at a new scheduling timing acquired by the offset value, and the additional bits can be carried through physical layer signaling in a bitmap manner.

Alternatively, the signaling transmission module 42 selects a new unlicensed carrier from a set of candidate unlicensed carriers as a carrier scheduled for the UE and transmits the information indicating scheduling termination and/or information of the new unlicensed carrier selected from the set of candidate unlicensed carriers to the UE in the licensed carrier. For example, the base station transmits a resource grant of the unlicensed carrier at time n, and the scheduling timing of the unlicensed carrier (also called the original scheduling resource location) is subframe n+k, and is on the unlicensed carrier c1. If the base station does not successfully compete for the resource c1 in a subframe close to n+k (a subframe close to n+k is subframe n+k-j, where j is an integer greater than or equal to 1), i.e., the scheduling timing of the unlicensed carrier does not match the carrier occupation time, the signaling transmission module 42 selects an unlicensed carrier c2 from the set of unlicensed carriers as a new scheduled carrier, and transmits information indicating scheduling termination and/or information of the unlicensed carrier c2 to the UE in the licensed carrier. The UE transmits data in the unlicensed carrier c2 in the scheduling resource location n+k.

Specifically, the signaling transmission module 42 transmitting the information indicating scheduling termination to the UE may comprise: the signaling transmission module 42 indicating termination of scheduling of an original carrier to the UE through physical layer DCI. Preferably, the signaling transmission module 42 indicates termination of scheduling of an original carrier using a reserved bit state of a CIF bit field in the DCI, or indicates termination of scheduling of an original carrier by setting a dedicated bit in the DCI, or indicates termination of scheduling of an original carrier by scrambling the physical layer signaling with an appointed RNTI.

The set of candidate unlicensed carriers is in a UE-specific form or in a cell-specific form. The candidate unlicensed carriers in the set of candidate unlicensed carriers are selected based on a measurement result of the base station or the UE or other principles. For example, the base station selects an appropriate unlicensed carrier as a candidate unlicensed carrier based on its own measurement result for the unlicensed carrier. In this case, all the UEs have the same set of candidate unlicensed carriers, and the set of candidate unlicensed carriers which is configured in such manner is in a cell-specific form. On the contrary, if a suitable set of candidate unlicensed carriers is configured for the UE based on the measurement result of the unlicensed carrier fed back by the UE, the set of candidate unlicensed carriers is in a UE-specific form.

Here, the measurement of the unlicensed carrier by the base station or the UE includes a linear average of the energy observed by the base station or the UE on a given bandwidth of the unlicensed carrier within a given observation time, where the observed energy comes from other cells which are at the same frequency as that of the unlicensed carrier cell, and/or sites belonging to a different system from that of the base station, and/or energy which is leaked to a current band from bands adjacent to the unlicensed carrier, and/or energy generated by thermal noise. Further, the given observation time is preferably a single or multiple OFDM symbols, and a given bandwidth of the unlicensed carrier is preferably a full bandwidth.

Alternatively, the signaling transmission module 42 informs the information of the new unlicensed carrier to the UE through the physical layer DCI, herein when the signaling transmission module 42 configures the new unlicensed carrier for all the UEs scheduled on the initial carrier, the new unlicensed carrier may be described in a bitmap manner, and a format which is easy for blind-retrieval is selected in principle as the DCI format to be used. For example, a number of bits corresponding to the DCI format is unique. It may be the case that first M bits (herein M is greater than or equal to 1) of the predefined DCI format carry the information of the new unlicensed carrier, and a mapping relationship between candidate unlicensed carriers in the set of candidate unlicensed carriers and the first M bits of the predefined DCI format is predefined. For example, assuming that M is equal to 5, carrier C1 is represented by 00001, carrier C2 is represented by 00010, carrier C3 is represented by 00100, and the value of M in the predefined DCI format may be modified based on a variation in the number of candidate unlicensed carriers.

In addition, the signaling transmission module 42 may also indicate termination of scheduling of an original unlicensed carrier by scrambling the DCI with an appointed RNTI, and indicate a new unlicensed carrier using a reserved bit state of a CIF bit field in the DCI, or indicate termination of scheduling of an original unlicensed carrier using a reserved bit state of a CIF bit field in the DCI, and select first M bits (herein M is greater than or equal to 1) in the DCI to describe a new unlicensed carrier in a bitmap manner. Herein, the DCI information is scrambled with an appointed RNTI, and is transmitted in a PDCCH or ePDCCH common search space, or transmitted in an appointed resource. Herein, when the new unlicensed carrier is described in a bitmap manner, the original unlicensed carrier can be simultaneously described for indicating termination of scheduling of the original unlicensed carrier.

When the set of candidate unlicensed carriers is in a UE-specific manner, the DCI may be scrambled by the signaling transmission module 42 with a C-RNTI allocated by the UE. In this case, the CIF bit field in the DCI is a reserved bit state, and CIF bit state 101 is predefined to represent termination of scheduling of the original unlicensed carrier, the new unlicensed carrier is described in a bitmap manner, and the DCI information is transmitted in a PDCCH or ePDCCH dedicated search space, or is transmitted in an appointed resource.

For a situation where the base station continuously transmits a plurality of UL grants of the UE in the time domain, an indication whether a scheduling process is valid is defined in a bitmap manner in the physical layer DCI, and the signaling transmission module 42 indicates an invalid scheduling process in the licensed carrier in a bitmap manner through the physical layer DCI; or the base station presets a pattern relationship between different processes and different transmission times of the physical layer DCI, and the signaling transmission module 42 transmits physical layer DCI at a time corresponding to a process according to the pattern relationship to indicate that the process is invalid.

Alternatively, a scheduling termination channel corresponding to a PDCCH or ePDCCH is preset, and is used to transmit an indication of scheduling termination. The signaling transmission module 42 transmits the indication of scheduling termination and/or signaling for indicating a scheduling update to the UE in the licensed carrier through the scheduling termination channel.

Specifically, the scheduling termination channel may be implemented by a reserved part of PHICH resources or physical layer DCI.

Herein, in a first manner, the signaling transmission module 42 transmits an indication of scheduling termination and/or signaling for indicating a scheduling update through the reserved PHICH resource, and when configuring an unlicensed carrier, the signaling transmission module 42 configures a parameter of a reserved PHICH resource together with a parameter of an unlicensed carrier and the parameter of the reserved PHICH resource and the unlicensed carrier are configured to have a mapping relationship therebetween;

The signaling transmission module 42 transmits an indication of scheduling termination and/or signaling for indicating a scheduling update in the licensed carrier at a specified time. Preferably, the signaling transmission module 42 transmits the indication of scheduling termination and/or the signaling for indicating a scheduling update in the licensed carrier in the reserved PHICH resource in a first subframe time after preemption of unlicensed carrier resources is unsuccessful; or the signaling transmission module 42 transmits the indication of scheduling termination and/or the signaling for indicating a scheduling update in the licensed carrier in a reserved PHICH resource in a predefined subframe time corresponding to a UE process.

In addition, in a second manner, the signaling transmission module 42 transmits indication of scheduling termination and/or signaling for indicating a scheduling update through physical layer DCI. Here, a format which is easy for blind-retrieval is selected in principle as the DCI to be used. For example, a number of bits corresponding to the DCI format is unique. As another example, when DCI 3A is used, an appointed bit state is set to indicate scheduling termination and/or the signaling for indicating a scheduling update. The DCI may be scrambled with an appointed RNTI, and is transmitted in a PDCCH or ePDCCH common search space or is transmitted in an appointed resource.

Transmitting the indication of scheduling termination and/or the signaling for indicating a scheduling update through the physical layer DCI further includes: describing information of an unlicensed carrier in which scheduling is to be terminated and/or a new unlicensed carrier in a bitmap manner. Here, a format which is easy for blind-retrieval is selected in principle as the DCI to be used. For example, a number of bits corresponding to the DCI format is unique. For example, first M bits (where M is greater than or equal to 1) of the predefined DCI format carry the indication of scheduling termination and/or the information of the new unlicensed carrier, and a mapping relationship between the unlicensed carrier and the M bits is predefined. The DCI may be scrambled with an appointed RNTI, and is transmitted in a PDCCH or ePDCCH common search space or is transmitted in an appointed resource.

Transmitting the indication of scheduling termination and/or the signaling for indicating a scheduling update through the physical layer DCI further includes: indicating scheduling termination and/or signaling for indicating a scheduling update using a reserved state of a CIF bit field in the DCI, or indicating scheduling termination and/or signaling for indicating a scheduling update by setting a dedicated bit in the DCI. The DCI may be scrambled with a C-RNTI, and is transmitted in a PDCCH or ePDCCH dedicated search space, or is transmitted in an appointed resource.

For a situation where the base station continuously transmits a plurality of UL grants of the UE in the time domain, an indication whether a scheduling process is valid is defined in a bitmap manner in the physical layer DCI, and the signaling transmission module 42 indicates an invalid scheduling process in the licensed carrier in a bitmap manner through the physical layer DCI; or the base station presets a pattern relationship between different processes and different transmission times of the physical layer DCI, and the signaling transmission module 42 transmits physical layer DCI at a time corresponding to a process according to the pattern relationship to indicate that the process is invalid.

Specifically, the signaling transmission module 42 transmits an indication of scheduling termination and/or signaling for indicating a scheduling update in the licensed carrier at a specified time. Preferably, the signaling transmission module 42 is appointed to transmit the indication of scheduling termination and/or the signaling for indicating a scheduling update in the licensed carrier in a first subframe after preemption of unlicensed carrier resources is unsuccessful; or the signaling transmission module 42 is appointed to transmit the indication of scheduling termination and/or the signaling for indicating a scheduling update in the licensed carrier in a predefined subframe corresponding to a UE process.

Specifically, the specific meaning of the indication of scheduling termination transmitted through the scheduling termination channel at least includes terminating the current scheduling and continuing to schedule a carrier if resources are competed for subsequently; or terminating the current scheduling and not continuing to schedule a carrier subsequently.

The embodiments of the present invention provide a UE, as shown in Fig. 5, which includes a signaling reception module 51 and a signaling processing module 52, herein
the signaling reception module 51 receives the signaling for indicating a scheduling termination and/or signaling for indicating a scheduling update in a licensed carrier, and transmits the signaling for indicating a scheduling termination and/or the signaling for indicating a scheduling update to the signaling processing module 52; and the signaling processing module 52 terminates data transmission in a starting scheduling resource location according to the signaling for indicating a scheduling termination, and/or transmits data in a new scheduling resource location according to the signaling for indicating a scheduling update.

Specifically, the signaling reception module 51 acquires the information indicating scheduling termination and/or an offset value relative to a starting scheduling resource location through physical layer DCI in the licensed carrier, and the signaling processing module 52 terminates data transmission in a starting scheduling resource location based on the information indicating scheduling termination, and/or transmits data in a new scheduling resource location based on the offset value. Preferably, the signaling reception module 51 learns termination of the original scheduling according to a bit state of a CIF bit field in the physical layer DCI or according to a dedicated bit set in the physical layer DCI; and/or learns the offset value relative to the starting scheduling resource location according to a reserved bit state of a CIF bit field in the physical layer DCI or according to a bitmap mapping relationship predefined in the physical layer DCI. The signaling processing module 52 does not transmit data in the starting scheduling resource location, and transmits data in a new scheduling resource location which is acquired according to the offset value.

Specifically, for a situation where the UE corresponds to a plurality of UL grants, the signaling processing module 52 processing the physical layer DCI received by the signaling reception module 51 includes at least one of:
the signaling processing module 52 terminating all the corresponding UL grants based on the physical layer DCI indicating scheduling termination;
the signaling processing module 52 terminating a UL grant of a corresponding process based on an indication of a bit in the physical layer DCI; and
the signaling reception module 51 receiving the physical layer DCI at a corresponding time based on a preset pattern relationship between processes and reception times of the physical layer DCI, and the signaling processing module 52 determining termination of a UL grant of a corresponding process based on the physical layer DCI.

Specifically, the signaling reception module 51 monitors the indication of scheduling termination and/or the offset value relative to the starting scheduling resource location in an appointed period of time. Preferably, the signaling reception module 51 of the UE monitors an indication of scheduling termination and/or the offset value relative to the starting scheduling resource location during a period of time from a time when a resource grant is acquired to a transmission time determined according to a starting scheduling resource; or monitors the indication of scheduling termination and/or the offset value relative to the starting scheduling resource location in a corresponding subframe based on a predefined pattern relationship between processes and reception times of signaling.

Alternatively,
the signaling reception module 51 determines termination of scheduling of an original carrier and/or acquire information of a new unlicensed carrier through physical layer DCI in the licensed carrier, and the signaling processing module 52 terminates data transmission in an original unlicensed carrier and/or transmits data on a new unlicensed carrier based on the physical layer DCI.

Specifically, for a situation where the UE corresponds to a plurality of UL grants, the signaling reception module 52 processing the physical layer DCI received by the signaling processing module 51 includes at least one of:
the signaling processing module 52 terminating all the corresponding UL grants based on the physical layer DCI indicating termination of scheduling of an original carrier;
the signaling processing module 52 terminating a UL grant of a corresponding process based on an indication of a bit in the physical layer DCI; and
the signaling reception module 51 receiving the physical layer DCI at a corresponding time based on a preset pattern relationship between processes and reception times of the physical layer DCI, and the signaling processing module 52 determining termination of a UL grant of a corresponding process based on the physical layer DCI.

Specifically, the signaling reception module 51 monitors the information indicating scheduling termination and/or information of a new unlicensed carrier selected from a set of candidate unlicensed carriers in an appointed period of time. Preferably, the signaling reception module 51 monitors the information indicating scheduling termination and/or information of a new unlicensed carrier selected from a set of candidate unlicensed carriers during a period of time from a time when a resource grant is acquired to a transmission time determined according to a starting scheduling resource; or monitors the information indicating scheduling termination and/or information of a new unlicensed carrier selected from a set of candidate unlicensed carriers in a corresponding subframe based on a predefined pattern relationship between processes and reception times of signaling.

The manner of the signaling reception module 51 determining termination of scheduling of an original carrier through the physical layer DCI includes at least one of correctly parsing the physical layer DCI using an appointed RNTI; displaying a CIF bit field in the physical layer DCI as a reserved state; and indicating a bit of termination of scheduling of the original carrier in the physical layer DCI.

Specifically, the signaling reception module 51 determines termination of scheduling of an original carrier and/or acquires information of a new unlicensed carrier in a bitmap manner of the physical layer DCI in a common search space using an appointed RNTI; or the signaling reception module 51 determines termination of scheduling of an original unlicensed carrier and/or acquire information of a new unlicensed carrier through an indication of a reserved bit state of a CIF bit field in the physical layer DCI in a common search space using an appointed RNTI; or the signaling reception module 51 determines termination of scheduling of an original unlicensed carrier through an indication of a reserved bit state of a CIF field in the physical layer DCI and/or acquire information of a new unlicensed carrier in a bitmap manner of the physical layer DCI in a common search space using an appointed RNTI; or the signaling reception module 51 determines termination of scheduling of an original unlicensed carrier through an indication of a reserved bit state of a CIF field in the physical layer DCI and/or acquires information of a new unlicensed carrier in a bitmap manner of the physical layer DCI in a dedicated search space using a C-RNTI.

Here, when the signaling processing module 52 transmits data in the new unlicensed carrier, parameters such as a resource location, an MCS, a process number etc. indicated in the original scheduling are reused, or when the base station uses the physical layer DCI to notify the new unlicensed carrier, new transmission parameters are carried, and the signaling processing module 52 transmits data in the new unlicensed carrier using the new transmission parameters.

Based on the configuration of the base station, the signaling processing module 52 measures carriers in the configured set of candidate unlicensed carriers and reports a measurement result to the base station. Preferably, the base station configures the set of candidate unlicensed carriers in a UE-specific manner.

Alternatively,
the signaling reception module 51 receives the indication of scheduling termination and/or the signaling for indicating a scheduling update in the reserved PHICH resource in the licensed carrier by acquiring parameters of the reserved PHICH resource associated with the unlicensed carrier, or acquires the indication of scheduling termination and/or the signaling for indicating a scheduling update in the scheduling termination channel through the physical layer DCI, and the signaling processing module 52 terminates data transmission on the corresponding unlicensed carrier in the starting scheduling resource location based on the physical layer DCI.

Specifically, for a situation where the UE corresponds to a plurality of UL grants and the indication of scheduling termination is acquired through physical layer DCI in the scheduling termination channel, the signaling processing module 52 processing the physical layer DCI received by the signaling reception module 51 includes at least one of:
the signaling processing module 52 terminating all the corresponding UL grants based on the physical layer DCI indicating scheduling termination;
the signaling processing module 52 terminating a UL grant of a corresponding process based on an indication of a bit in the physical layer DCI; and
the signaling reception module 51 receiving the physical layer DCI at a corresponding time based on a preset pattern relationship between processes and reception times of the physical layer DCI, and the signaling processing module 52 determining termination of a UL grant of a corresponding process based on the physical layer DCI.
for a situation where the UE corresponds to a plurality of UL grants and an indication of scheduling termination is received through a reserved PHICH resource, the signaling processing module 52 processing the reserved PHICH resource received by the signaling reception module 51 includes at least one of:
   the signaling processing module 52 terminating all the corresponding UL grants based on the reserved PHICH resource indicating scheduling termination;
   the signaling processing module 52 terminating a UL grant of a corresponding process based on an indication of a bit in the reserved PHICH resource; and
   the signaling processing module 52 receiving a corresponding PHICH at a corresponding time based on a preset pattern relationship between processes and reception times of reserved PHICH resources, and determining termination of a UL grant of a corresponding process based on an indication of the PHICH.

Specifically, the signaling reception module 51 monitors an indication of scheduling termination and/or signaling for indicating a scheduling update in an appointed period of time. Preferably, the signaling reception module 51 monitors the indication of scheduling termination and/or the signaling for indicating a scheduling update during a period of time from a time when a resource grant is acquired to a transmission time determined according to a starting scheduling resource; or monitors the indication of scheduling termination and/or the signaling for indicating a scheduling update in a corresponding subframe based on a predefined pattern relationship between processes and reception times of signaling.

The signaling reception module 51 acquiring an indication of scheduling termination and/or signaling for indicating a scheduling update through the physical layer DCI includes: the signaling reception module 51 retrieving corresponding DCI in a PDCCH or ePDCCH common search space using an appointed RNTI, and acquiring the indication of scheduling termination and/or the signaling for indicating a scheduling update based on a parsed result of the DCI.

In addition, the signaling reception module 51 receiving an indication of scheduling termination and/or signaling for indicating a scheduling update in the PDCCH or the ePDCCH further includes: retrieving corresponding DCI in a PDCCH or ePDCCH dedicated search space using the C-RNTI, and acquiring the indication of scheduling termination and/or signaling for indicating a scheduling update according to the reserved bit state of the CIF bit field in the parsed DCI.

The embodiments of the present invention further provide a system of scheduling an unlicensed carrier, as shown in Fig. 6, which includes a base station 61 and a UE 62, herein
the base station 61 transmits the signaling for indicating a scheduling termination and/or signaling for indicating a scheduling update in a licensed carrier when determining that the signaling for indicating a scheduling termination and/or the signaling for indicating a scheduling update need to be transmitted; and the UE 62 receives the signaling for indicating a scheduling termination and/or the signaling for indicating a scheduling update in the licensed carrier, and terminates data transmission in a starting scheduling resource location according to the signaling for indicating a scheduling termination, and/or transmits data in a new scheduling resource location according to the signaling for indicating a scheduling update.

Specific applications of the present invention will be described in detail with reference to the following embodiments.

### Embodiment one

This embodiment is an instance of realizing a method of scheduling an unlicensed carrier based on an offset relative to a starting scheduling resource location under a synchronous HARQ.

In this embodiment, it is assumed that both the base station and the UE are in a FDD format. At the time of subframe n, the base station competes for unlicensed carrier C1 and transmits an uplink grant of transmission on the carrier C1 by the UE. According to a timing relation of the FDD, the UE should perform uplink transmission at subframe n+4. If the base station does not successfully compete for resources of unlicensed carrier C1 (including that regression of a main system causes the base station to release the resources which are acquired currently by competition, and another strong interference system causes the base station to release the resources which are acquired by competition due to reduction in reliability of the transmission, which are described as not successfully completing for resources below) in a subframe close to n+4 (for example, n+k, where a value of k is greater than or equal to 1 and less than 4), the base station notifies the offset of the new scheduling resource location relative to the starting scheduling resource location through the physical layer DCI at time n+k+1. For example, the offset is indicated using a reserved bit state of a CIF bit field in the DCI. Here, a mapping relationship between reserved bit states of the CIF bit field and offset values may be predefined. For example, reserved state 101 corresponds to an offset value of 4, 110 corresponds to an offset value of 8, and 111 corresponds to an offset value of 12. In the present embodiment, it is assumed that the CIF indicates 110 in the DCI. At the same time, termination of the original scheduling may be implicitly represented using a CIF reserved bit state in the

### DCI.

For a situation where the base station continuously transmits a plurality of UL grants for a specific UE in the time domain, for the present embodiment, it is assumed that the base station continuously transmits two UL grants at the time of sub frame n and the time of subframe n+1 to the UE. In order to distinguish therebetween, the base station can define an indication whether a scheduling process is valid in a bitmap manner using an available bit other than CIF in the DCI. For example, 8 bits are used to indicate whether different UL processes are valid or the base station predefines different transmission timings of DCIs corresponding to different processes. For example, a process of a UL grant is predefined to be transmitted in subframe n and DCI indication signaling of whether the process is valid is transmitted at time n+k+1, and a process of a UL grant is predefined to be transmitted in subframe n+1 and DCI of whether the process is valid is transmitted at time n+k+2. The physical layer DCI used in the present embodiment is transmitted on a licensed carrier of the base station.

The UE receives the related DCI in the licensed carrier at an appointed time, and preferably, the UE monitors whether there is the DCI transmission in a period of time from a time when a resource grant is acquired (time n given in the present embodiment) to a transmission time (time n+4 given in the present embodiment) determined according to the original scheduling timing; or the UE monitors whether there is the DCI transmission in a corresponding subframe (timings n+k+1 and n+k+2 given in the present embodiment) based on a predefined pattern relationship between processes and DCI reception timings, and learns termination of the original scheduling according to information parsed in the DCI, and preferably, using a reserved bit state of the CIF bit field in the DCI or using a dedicated bit set in the DCI. The UE acquires an offset value relative to the a starting scheduling resource location using different reserved bit states of the CIF bit field or using a bitmap mapping relationship predefined in the DCI. The UE does not transmit data in the starting scheduling resource location, and transmits data in a new scheduling resource location acquired according to the offset value. For the present embodiment, the UE terminates uplink data transmission in the original scheduling resource location, i.e., subframe n+4 and waits for a competition condition of the carrier C1 at n+16 to determine whether to transmit uplink data.

Specifically, for a situation where the UE corresponds to a plurality of UL grants, the UE processing the received DCI signaling includes at least one of:
the UE receiving the DCI, and terminating all the corresponding subsequent UL grants. For example, in the present embodiment, the UE receives the DCI which is received at time n+k+1, and terminates all the 2 UL grants which are continuously transmitted at the time of subframe n and the time of subframe n+1;
the UE determining that a UL grant of a corresponding process is terminated based on an indication of a bit in the DCI (which is indicated using a bit state predefined in the DCI); and
the UE receiving DCI at a corresponding time and determining whether a UL grant of a corresponding process is terminated based on a predefined pattern relationship between processes and reception timings of DCI. For example, for a process of a UL grant which is predefined to be transmitted in subframe n, the UE receives DCI indicating whether the process is invalid at time n+k+1, and for a process of a UL grant which is predefined to be transmitted in subframe n+1, the UE receives DCI indicating whether the process is invalid at time n+k+2.

### Embodiment two

This embodiment is an instance of realizing a method of scheduling an unlicensed carrier based on an offset relative to a starting scheduling resource location in an asynchronous HARQ mode.

For the asynchronous HARQ situation, as the offset value is irregular, it needs to notify a process number in the new scheduling resource location.

It is assumed that both the base station and the UE are in a FDD format. At the time of subframe n, the base station competes for unlicensed carrier C1 and transmits an uplink grant of transmission on the carrier C1 by the UE. An upper limit of transmission times of the offset corresponding to the service scheduled for the base station which has strict requirements on delay is 2. According to a timing relation of the FDD, the UE should perform uplink transmission at subframe n+4. If the base station does not successfully compete for resources of unlicensed carrier C1 in a subframe close to n+4 (for example, n+k, where a value of k is greater than or equal to 1 and less than 4), the base station notifies the offset of the new scheduling resource location relative to the starting scheduling resource location through the physical layer DCI at time n+k+1. The DCI reuses the existing DCI format, and is scrambled with a C-RNTI allocated by the UE. At this time, the CIF bit field in the DCI uses a reserved bit state to indicate that the original scheduling is invalid. For example, reserved bit state 101 of the CIF bit field is predefined to indicate that the original scheduling is invalid. In the present embodiment, the new scheduling resource location is described in a bitmap manner using DCI Format0, and 5 bits in the DCI Format0 are set to describe the signaling of the new scheduling resource location, 3 bits are used to describe a process number of the new scheduling resource location, and remaining bits are reserved sequentially for transmission. A mapping relationship between reserved bit states of the CIF bit field and offset values may be predefined. For example, 00001 corresponds to an offset value of 5, 00010 corresponds to an offset value of 6, 00011 corresponds to an offset value of 7, and so on. In the present embodiment, CIF indicates 101 in the DCI, and 5 bit states which are used to describe the new scheduling resource location are 00001, and bit states which describe the HARQ process number are 010. The PDCCH corresponding to the DCI is transmitted in a dedicated search space.

For a situation where the base station continuously transmits a plurality of UL grants for a specific UE in the time domain, for the present embodiment, it is assumed that the base station continuously transmits two UL grants at the time of sub frame n and the time of sub frame n+1 to the UE. In order to distinguish therebetween, the base station can define an indication whether a scheduling process is valid in a bitmap manner using an available bit other than CIF in the DCI. For example, 8 bits are used to indicate whether different processes are valid or the base station predefines different transmission timings of DCIs corresponding to different processes. For example, a process of a UL grant is predefined to be transmitted in subframe n and DCI indicating whether the process is valid is transmitted at time n+k+1, and a process of a UL grant is predefined to be transmitted in subframe n+1 and DCI indicating whether the process is valid is transmitted at time n+k+2. The physical layer DCI used in the present embodiment is transmitted on a licensed carrier of the base station.

At the receiving end, the UE receives the related DCI in the licensed carrier at an appointed time, and preferably, the UE monitors whether there is the DCI transmission in a period of time from a time when a resource grant is acquired (time n given in the present embodiment) to a transmission time (time n+4 given in the present embodiment) determined according to the original scheduling timing; or the UE monitors whether there is the DCI transmission in a corresponding sub frame (timings n+k+1 and n+k+2 given in the present embodiment) based on a predefined pattern relationship between processes and signaling reception timings, and then the UE determines that the original scheduling is invalid based on the CIF information parsed in the DCI, and determines that it needs to perform new transmission in a location which has an offset of 5 subframes relative to the starting scheduling resource location through a predefined mapping relationship between bit states and offsets, and parses a corresponding process number of 2 in the new scheduling resource location using the predefined state of the HARQ field. The UE terminates uplink data transmission in the original scheduling resource location (subframe n+4) and waits for a competition condition of the carrier C1 at n+10 to determine whether to transmit uplink data.

Specifically, for a situation where the UE corresponds to a plurality of UL grants, the UE processing the received DCI includes at least one of:
the UE receiving the DCI, and terminating all the corresponding subsequent UL grants. For example, in the present embodiment, the UE receives the DCI which is received at time n+k+1, and terminates all the 2 UL grants which are continuously transmitted at the time of subframe n and the time of subframe n+1;
the UE determining that a UL grant of a corresponding process is terminated based on an indication of a bit in the DCI (which is indicated using a bit state predefined in the DCI); and
the UE receiving DCI at a corresponding time and determining whether a UL grant of a corresponding process is terminated based on a predefined pattern relationship between processes and reception timings of DCI. For example, for a process of a UL grant which is predefined to be transmitted in subframe n, the UE receives DCI indicating whether the process is invalid at time n+k+1, and for a process of a UL grant which is predefined to be transmitted in subframe n+1, the UE receives DCI indicating whether the process is invalid at time n+k+2.

### Embodiment three

This embodiment is based on an avoidance strategy for transmission on a new unlicensed carrier (in a cell-specific manner).

It is assumed that both the base station and the UE are in a FDD format.

At the transmitting end, the base station selects a suitable unlicensed carrier as a candidate unlicensed carrier based on its own measurement result for the unlicensed carrier. In this way, a set of candidate unlicensed carriers is formed. It is assumed that the base station manages and uses the unlicensed carrier based on a manner of carrier aggregation, herein a licensed carrier is used as a primary carrier and an unlicensed carrier is used as a secondary carrier. In subframe n, the set of candidate unlicensed carriers configured by the base station is S1: {C1, C2, C3}. The base station selects C1 from S1 as a carrier scheduled for the UE, and notifies it to the UE. According to the scheduling timing of the FDD, the UE should transmit uplink data on unlicensed carrier C1 at n+4. If the base station does not successfully compete for resource C1 in a subframe close to n+4 (for example, n+k, where k is greater than or equal to 1 and less than 4), at this time, the set of candidate unlicensed carriers becomes S2 {C2, C3}. The base station needs to notify the UE to terminate transmission in C1 at n+4, and change to select carrier C2 from S2 as a new scheduled carrier. For the transmission time of the signaling, it can be known with reference to the transmission time in embodiment one. The base station indicates the above information in a bitmap manner using the physical layer DCI. For example, the existing DCI 1C is reused and is scrambled with an appointed RNTI. First 5 bits of the DCI 1C are predefined to carry information of the new unlicensed carrier. Here, it needs to predefine a mapping relationship between candidate unlicensed carriers in the set of candidate unlicensed carriers and predefined bits. For example, 00001 represents carrier C1, 00010 represents carrier C2, and 00100 represents carrier C3. A length of bitmap bits in the predefined DCI 1C may be adjusted based on a variation in a number of candidate unlicensed carriers. For the present embodiment, bits transmitted by the base station in the DCI 1C are 00010, and remaining bits are used as reserved bits and are still needed to be transmitted. After the DCI 1C is scrambled with an appointed RNTI, it is transmitted in a PDCCH or ePDCCH common search space. The base station notifies the UE of the information of the set of candidate unlicensed carriers and a mapping relationship between the candidate unlicensed carriers in the set of candidate unlicensed carriers and predefined bits in advance. Alternatively, the base station may add information indicating a carrier which is scheduled originally in the bitmap, for example, bitmap of 0000100010 represents that the carrier C1 which is scheduled originally is invalid, and transmission should be performed in a new unlicensed carrier C2. Alternatively, for a situation where the base station continuously transmits a plurality of UL grants for a specific UE in the time domain, for the present embodiment, it is assumed that the base station continuously transmits two UL grants at the time of sub frame n and the time of sub frame n+1 to the UE. In order to distinguish therebetween, the base station can define an indication whether a scheduling process is valid in a bitmap manner in the DCI. For example, 8 bits are used to indicate whether different UL processes are valid or the base station predefines different transmission timings of DCIs corresponding to different processes. For example, a process of a UL grant is predefined to be transmitted in subframe n and DCI indicating whether the process is valid is transmitted at time n+k+1, and a process of a UL grant is predefined to be transmitted in subframe n+1 and DCI indicating whether the process is valid is transmitted at time n+k+2. The physical layer DCI used in the present embodiment is transmitted on a licensed carrier of the base station.

At the receiving end, the UE receives the related DCI information in the licensed carrier at an appointed time, and preferably, the UE monitors whether there is the DCI transmission in a period of time from a time when a resource grant is acquired (time n given in the present embodiment) to a transmission time (time n+4 given in the present embodiment) determined according to the original scheduling timing; or the UE monitors whether there is the DCI transmission in a corresponding subframe (timings n+k+1 and n+k+2 given in the present embodiment) based on a predefined pattern relationship between processes and DCI reception timings, and then the UE correctly detects DCI 1C in a common search space using an appointed RNTI, learns that the original scheduled carrier is invalid, and determines that the new unlicensed carrier is C2 based on the 5bit state information in the DCI 1C in combination with a mapping relationship between candidate unlicensed carriers in the set of candidate unlicensed carriers and the predefined bits. The UE transmits data in the new unlicensed carrier C2 in subframe n+4. For other situations where the UE corresponds to a plurality of UL grants, the process of the UE can be known with reference to the manner in embodiment one.

When the UE transmits data in the new unlicensed carrier, the UE reuses parameters indicated in the original scheduling such as a resource location, an MCS, a process number etc.; or for resource collision which may occur in the new scheduled carrier, when the base station notifies the new scheduled carrier using physical layer signaling, the base station may also need to carry new transmission parameters, for example, transferring the transmission parameters using a part of reserved bits in the above DCI 1C. The UE transmits data in the new carrier using the new transmission parameters.

### Embodiment four

It is assumed that both the base station and the UE are in a FDD format.

At the transmitting end, the base station selects a suitable unlicensed carrier as a candidate unlicensed carrier based on its own measurement result for the unlicensed carrier. In this way, a set of candidate unlicensed carriers is formed. It is assumed that the base station manages and uses the unlicensed carrier based on a manner of carrier aggregation, herein a licensed carrier is used as a primary carrier and an unlicensed carrier is used as a secondary carrier. In subframe n, the set of candidate unlicensed carriers configured by the base station is S1: {C1, C2, C3}. The base station selects C1 from S1 as a carrier scheduled for the UE, and notifies it to the UE. According to the scheduling timing of the FDD, the UE should transmit uplink data on unlicensed carrier C1 at n+4. If the base station does not successfully compete for resource C1 in a subframe close to n+4 (for example, n+k, where k is greater than or equal to 1 and less than 4), at this time, the set of candidate unlicensed carriers becomes S2 {C2, C3}. The base station needs to notify the UE to terminate transmission in C1 at n+4, and change to select carrier C2 from S2 as a new scheduled carrier. For the transmission time of the signaling, it can be known with reference to the transmission time in embodiment one. The base station indicates the information of the new unlicensed carrier using the CIF in the physical layer DCI, and indicates that the original scheduled carrier is invalid by scrambling with an appointed RNTI. A mapping relationship between carriers in the set of candidate unlicensed carriers and CIF bits is predefined. For example, 001 represents carrier C1, 010 represents carrier C2, and 011 represents carrier C3. For the present embodiment, CIF bits transmitted by the base station in the DCI Format0 are 010, and remaining bits are used as reserved bits and are still needed to be transmitted. After the DCI Format0 is scrambled with an appointed RNTI, it is transmitted in a PDCCH or ePDCCH common search space. With respect to bits except for the CIF bits, the new scheduled carrier may also be indicated in a bitmap manner in addition to being transmitted as a reserved bit. For example, the original scheduling is indicated to be invalid using a reserved bit state of the CIF field, and first M bits (where M is greater than or equal to 1) in the DCI are selected to describe the new scheduled carrier in a bitmap manner. A mapping relationship between carriers in the set of candidate unlicensed carriers and predefined bits is predefined. At this time, the DCI is scrambled with an appointed RNTI, and is transmitted in a PDCCH or ePDCCH common search space, or is transmitted in an appointed resource. When the new scheduled carrier is described in a bitmap manner, the indication of the original scheduled carrier may be included.

Alternatively, for a situation where the base station continuously transmits a plurality of UL grants for a specific UE in the time domain, for the present embodiment, it is assumed that the base station continuously transmits two UL grants at the time of subframe n and the time of subframe n+1 to the UE. In order to distinguish therebetween, the base station can define an indication whether a scheduling process is valid in a bitmap manner in the DCI. For example, 8 bits are used to indicate whether different UL processes are valid or the base station predefines different transmission timings of DCIs corresponding to different processes. For example, a process of a UL grant is predefined to be transmitted in subframe n and DCI indication signaling indicating whether the process is valid is transmitted at time n+k+1, and a process of a UL grant is predefined to be transmitted in subframe n+1 and DCI indicating whether the process is valid is transmitted at time n+k+2. The physical layer DCI used in the present embodiment is transmitted on a licensed carrier of the base station.

At the receiving end, the UE receives the related DCI information in the licensed carrier at an appointed time, and preferably, the UE monitors whether there is the DCI transmission in a period of time from a time when a resource grant is acquired (time n given in the present embodiment) to a transmission time (time n+4 given in the present embodiment) determined according to the original scheduling timing; or the UE monitors whether there is the DCI transmission in a corresponding sub frame (timings n+k+1 and n+k+2 given in the present embodiment) based on a predefined pattern relationship between processes and DCI reception timings, and then the UE correctly detects DCI Format0 in a common search space using an appointed RNTI, can learn that the original scheduled carrier is invalid, and can determine that the new scheduled carrier is C2 based on the CIF state information in the DCI Format0. The UE transmits data in a new scheduled carrier C2 in subframe n+4, or the UE correctly detects DCI Format0 in a common search space using a predetermined RNTI, can learn that the original scheduled carrier is unavailable based on the CIF reserved state in the DCI Format0, and can determine that the new scheduled carrier is C2 based on the bitmap indication information in the DCI. The UE transmits data in the new scheduled carrier C2 in subframe n+4. For other situations where the UE corresponds to a plurality of UL grants, the process of the UE can be known with reference to the manner in embodiment one.

When the UE transmits data in the new unlicensed carrier, the UE reuses parameters indicated in the original scheduling such as a resource location, an MCS, a process number etc.; or for resource collision which may occur in the new scheduled carrier, when the base station notifies the new scheduled carrier using physical layer signaling, the base station may also need to carry new transmission parameters, for example, transferring the transmission parameters using a part of reserved bits in the above DCI Format0, and can distinguish transmission parameters of different UEs in a manner similar to DCI3/3A. The UE transmits data in the new carrier using the new transmission parameters.

### Embodiment five

This embodiment is based on an avoidance strategy for transmission on a new unlicensed carrier (in a UE-specific manner).

It is assumed that both the base station and the UE are in a FDD format.

At the transmitting end, the base station configures a plurality of suitable unlicensed carriers for the UE based on a measurement result of unlicensed carriers fed back by the UE, to form a set of candidate unlicensed carriers. The set of unlicensed carriers changes with the result fed back by the UE. It is assumed that the base station manages and uses the unlicensed carrier based on a manner of carrier aggregation, herein a licensed carrier is used as a primary carrier and an unlicensed carrier is used as a secondary carrier. The available unlicensed carriers for the system comprise C1, C2, C3, C4 and C5. In subframe n, the set of candidate unlicensed carriers configured by the base station for UE1 is S1: {C1, C2, C3}, and the set of candidate unlicensed carriers configured by the base station for UE2 is S1: {C2, C3, C5}. The base station selects C1 from S1 as a carrier scheduled for the UE1, and notifies it to the UE1. According to the scheduling timing of the FDD, the UE1 should transmit uplink data on unlicensed carrier C1 at n+4. If the base station does not successfully compete for resource C1 in a subframe close to n+4 (for example, n+k, where k is greater than or equal to 1 and less than 4), at this time, the set of candidate unlicensed carriers of the UE1 maintained by the base station becomes S^1 {C2, C3}. The base station needs to notify the UE1 to terminate transmission in C1 at n+4, and change to select carrier C2 from S2 as a new scheduled carrier. For the transmission time of the signaling, it can be known with reference to the transmission time in embodiment one. The base station reuses the existing DCI format, and scrambles the DCI with a C-RNTI allocated by the UE. At this time, the CIF bit field in the DCI indicates that the original scheduling is invalid using the reserved bit state. For example, CIF bit state 101 is predefined to indicate that the original scheduling is invalid, and the new scheduled carrier is descried in a bitmap manner. For example, the existing DCI Format0 is reused and is scrambled with a C-RNTI. A CIF field in the DCI Format0 is predefined as 101, and first 8 bits in the DCI Format 0 except for the CIF indicate information of the new scheduled carrier. Here, it needs to predefine a mapping relationship between carriers in the set of candidate unlicensed carriers and predefined bits. For example, 00000001 represents carrier C1, 00000010 represents carrier C2, and 00000100 represents carrier C3. For the present embodiment, bits transmitted by the base station in the DCI Format0 are 00000010, and remaining bits are used as reserved bits. After the DCI is scrambled with a C-RNTI of UE1, it is transmitted in a PDCCH or ePDCCH dedicated search space. The base station notifies the UE1 of the information of the set of candidate unlicensed carriers and a mapping relationship between carriers in the set of candidate unlicensed carriers and predefined bits in advance.

Alternatively, for a situation where the base station continuously transmits a plurality of UL grants for a UE1 in the time domain, for the present embodiment, it is assumed that the base station continuously transmits two UL grants at the time of subframe n and the time of subframe n+1 to the UE1. In order to distinguish therebetween, the base station can define an indication whether a scheduling process is valid in a bitmap manner in the DCI. For example, 8 bits are used to indicate whether different UL processes are valid or the base station predefines different transmission timings of DCIs corresponding to different processes. For example, a process of a UL grant is predefined to be transmitted in subframe n and DCI indicating whether the process is valid is transmitted at time n+k+1, and a process of a UL grant is predefined to be transmitted in subframe n+1 and DCI indicating whether the process is valid is transmitted at time n+k+2. The physical layer DCI signaling used in the present embodiment is transmitted on a licensed carrier of the base station.

At the receiving end, the UE1 receives the related DCI information in the licensed carrier at an appointed time, and preferably, the UE monitors whether there is the DCI transmission in a period of time from a time when a resource grant is acquired (time n given in the present embodiment) to a transmission time (time n+4 given in the present embodiment) determined according to the original scheduling timing; or the UE monitors whether there is the DCI transmission in a corresponding subframe (timings n+k+1 and n+k+2 given in the present embodiment) based on a predefined pattern relationship between processes and signaling reception timings, and then the UE1 correctly detects DCI Format0 in a dedicated search space using a RNTI, can learn that the original scheduled carrier is invalid through a CIF state, and determines that the new scheduled carrier is C2 based on 8bit state information in the DCI in combination with a mapping relationship between carriers in the set of candidate unlicensed carriers and predefined bits. The UE transmits data in the new scheduled carrier C2 in subframe n+4. For other situations where the UE corresponds to a plurality of UL grants, the process of the UE can be known with reference to the manner in embodiment one.

When the UE transmits data in the new unlicensed carrier, the UE reuses parameters indicated in the original scheduling such as a resource location, an MCS, a process number etc.; or for resource collision which may occur in the new scheduled carrier, when the base station notifies the new scheduled carrier using physical layer signaling, the base station may also need to carry new transmission parameters, for example, the above DCI is UE-specific, and only uses the CIF field and bits which indicate the new carrier, and can transfer transmission parameters of the UE-specific using a part of reserved bits. The UE transmits data in the new carrier using the new transmission parameters.

### Embodiment six

It is assumed that both the base station and the UE are in a FDD format. At the time of subframe n, the base station competes for unlicensed carrier C1 and transmits an uplink grant of transmission on the carrier C1 by the UE. According to a timing relation of the FDD, the UE should perform uplink transmission at subframe n+4. If the base station does not successfully compete for resources of unlicensed carrier C1 in a subframe close to n+4 (for example, n+k, where a value of k is greater than or equal to 1 and less than 4), the base station indicates original scheduling termination through a predefined termination channel at time n+k+1, and the UE should terminate transmission at the original scheduling timing (subframe n+4). The predefined termination channel here is a reserved PHICH channel. For example, the base station may reserve some uplink RBs which are not scheduled and/or reserve some DMRS cyclic shifts which are not used. With these reserved parameters, some PHICH resource groups are reserved or some PHICH resources in the PHICH resource groups are reserved, and the base station avoids a combination of an uplink starting PRB index and a DMRS index corresponding to the reserved PHICH resource when scheduling the UE. When configuring the unlicensed carrier, the base station configures the parameter of the reserved PHICH resource together with the parameter of the unlicensed carrier, and there is a mapping relationship between the parameter of the reserved PHICH resource and the configured unlicensed carrier. The base station transfers the information of original scheduling termination indication in the reserved PHICH resource.

Alternatively, for a situation where the base station continuously transmits a plurality of UL grants for a specific UE in the time domain, for the present embodiment, it is assumed that the base station continuously transmits two UL grants at the time of subframe n and the time of subframe n+1 to the UE. In order to distinguish therebetween, the base station transmits DCI indicating whether a process is invalid in a predefined reserved PHICH resource of a subframe time corresponding to a UE process. For example, a process of a UL grant is predefined to be transmitted in subframe n and DCI indicating whether the process is invalid is transmitted in a reserved PHICH resource at time n+k+1, and a process of a UL grant is predefined to be transmitted in subframe n+1 and DCI indicating whether the process is invalid is transmitted in a reserved PHICH resource at time n+k+2. The physical layer DCI used in the present embodiment is transmitted on a licensed carrier of the base station.

At the receiving end, the UE acquires parameters of the reserved PHICH resource associated with the unlicensed carrier, and monitors whether there is transmission of original scheduling termination indication in a period of time from a time when a resource grant is acquired (time n given in the present embodiment) to a transmission time (time n+4 given in the present embodiment) determined according to the original scheduling timing; or the UE monitors whether there is transmission of original scheduling termination indication in a corresponding subframe (timings n+k+1 and n+k+2 given in the present embodiment) based on a predefined pattern relationship between processes and signaling reception timings, and if the original scheduling termination indication is received, the UE can learn that the original scheduled carrier is unavailable, and the UE terminates uplink data transmission in subframe n+4.

Specifically, for a situation where the UE corresponds to a plurality of UL grants, the UE processing the received original scheduling termination indication for terminating channel transmission includes at least one of:
the UE receiving the original scheduling termination indication, and terminating all the corresponding subsequent UL grants. For example, in the present embodiment, the UE receives the original scheduling termination indication in the reserved PHICH resource at time n+k+1, and terminates all the 2 UL grants which are continuously transmitted at the time of subframe n and the time of subframe n+1;
the UE receiving the original scheduling termination indication at a corresponding time and determining whether a UL grant of a corresponding process is terminated based on a predefined pattern relationship between processes and reception timings of the original scheduling termination indication for terminating channel transmission. For example, for a process of a UL grant which is predefined to be transmitted in subframe n, the UE receives original scheduling termination indication indicating whether the process is invalid in the reserved PHICH resource at time n+k+1, and for a process of a UL grant which is predefined to be transmitted in subframe n+1, the UE receives original scheduling termination indication indicating whether the process is invalid in the reserved PHICH resource at time n+k+2.

Embodiments of the present invention correspondingly provide a computer storage medium having stored therein computer executable instructions for performing the methods described in any of the above embodiments.

The various units described above can be implemented by a Central Processing Unit (CPU), a Digital Signal Processor (DSP), or a Field-Programmable Gate Array (FPGA) in an electronic device.

It will be appreciated by those skilled in the art that the embodiments of the present invention may be embodied as methods, systems or computer program products. Therefore, the present invention may be implemented in a form of hardware embodiments, software embodiments or embodiments incorporating software and hardware aspects. Moreover, the present invention may be implemented in a form of a computer program product embodied on one or more computer readable storage medium (including, but not limited to, a magnetic disk storage and an optical storage, etc.) containing computer readable program codes.

The present invention is described with reference to flowcharts and/or block diagrams of methods, devices (systems), and computer program products according to the embodiments of the present invention. It will be appreciated that each flow and/or block in the flowcharts and/or block diagrams and combinations thereof may be implemented by computer program instructions. The computer program instructions may be provided to a general purpose computer, a dedicated computer, an embedded processor or processors of other programmable data processing devices to form a machine, so that apparatus for implementing functions designated by one or more flows in a flowchart and/or one or more blocks in a block diagram may be generated by means of instructions executed by the computer or processors of other programmable data processing devices.

The computer program instructions may be also stored in a computer readable storage, which can direct the computer or other programmable data processing devices to operate in a specific manner. Thus, instructions stored in the computer readable storage may produce article of manufacture including instructions means. The instructions means implement functions as specified in one or more flows in a flowchart and/or one or more blocks in a block diagram.

The computer program instructions may be also loaded into a computer or other programmable data processing devices, so as to execute a serial of operation steps on the computer or other programmable data processing devices to produce processes implemented by the computer. To this end, instructions executed on the computer or other programmable devices may provide a step for implementing functions as specified in one or more flows in a flowchart and/or one or more blocks in a block diagram.

## Claims

1. A method for scheduling an unlicensed carrier, comprising:
a base station transmitting a signaling for indicating a scheduling termination and/or a signaling for indicating a scheduling update in a licensed carrier when determining that the signaling for indicating the scheduling termination and/or the signaling for indicating the scheduling update need to be transmitted.

2. The method according to claim 1, wherein transmitting a signaling for indicating a scheduling termination and/or a signaling for indicating a scheduling update in a licensed carrier comprises: the base station transmitting information indicating the scheduling termination and/or an offset value relative to a starting scheduling resource location to a User Equipment, UE, through physical layer Downlink Control Information. DCI.

3. The method according to claim 1, wherein transmitting a signaling for indicating a scheduling termination and/or a signaling for indicating a scheduling update in a licensed carrier comprises: the base station transmitting information indicating the scheduling termination and/or information of a new unlicensed carrier selected from a set of candidate unlicensed carriers to a UE through physical layer Downlink Control Information, DCI.

4. The method according to claim 1, wherein transmitting a signaling for indicating a scheduling termination and/or a signaling for indicating a scheduling update in a licensed carrier comprises: the base station transmitting an indication of scheduling termination and/or the signaling for indicating the scheduling update to a UE in the licensed carrier through a scheduling termination channel.

5. The method according to claim 1, wherein determining that the signaling for indicating the scheduling termination and/or the signaling for indicating the scheduling update need to be transmitted comprises: the base station determining that the signaling for indicating the scheduling termination and/or the signaling for indicating the scheduling update need to be transmitted by determining that an unlicensed carrier scheduling timing does not match a carrier occupation time.

6. The method according to claim 2, wherein the base station transmitting information indicating the scheduling termination through physical layer DCI comprises: the base station indicating the scheduling termination using a reserved bit state of a Carrier Indicator Field, CIF, in the DCI, or indicating the scheduling termination in a bitmap manner, or indicating the scheduling termination by setting a dedicated bit in the DCI.

7. The method according to claim 2, wherein the base station transmitting the information indicating the scheduling termination through physical layer DCI comprises: for a situation where the base station continuously transmits a plurality of uplink grants, UL grants, of the UE in a time domain, defining an indication whether a scheduling process is valid in a bitmap manner in the physical layer DCI, and the base station indicating an invalid scheduling process in the licensed carrier in a bitmap manner through the physical layer DCI; or the base station presetting a pattern relationship between different processes and different transmission times of the physical layer DCI, and the base station transmitting physical layer DCI at a time corresponding to a process according to the pattern relationship to indicate that the process is invalid.

8. The method according to claim 2, wherein the base station transmitting an indication of scheduling termination and/or an offset value relative to a starting scheduling resource location through physical layer DCI comprises: the base station transmitting the indication of scheduling termination and/or the offset value relative to the starting scheduling resource location in the licensed carrier in a first subframe after preemption of unlicensed carrier resources is unsuccessful; or the base station transmitting the indication of scheduling termination and/or the offset value relative to the starting scheduling resource location in the licensed carrier in a predefined subframe corresponding to a UE process.

9. The method according to claim 2, wherein the base station transmitting an offset value relative to a starting scheduling resource location to the UE through physical layer DCI comprises: the base station pre-establishing a mapping pattern between offset values and reserved bit states of CIF bit fields, and indicating the offset value through a reserved bit state of a CIF bit field in the DCI or indicating the offset value in a bitmap manner.

10. The method according to claim 3, wherein the base station transmitting the information indicating the scheduling termination to the UE through physical layer DCI comprises: the base station indicating termination of scheduling of an original carrier using a reserved bit state of CIF bit field in the DCI, or indicating termination of scheduling of an original carrier by setting a dedicated bit in the DCI, or indicating termination of scheduling of an original carrier by scrambling the DCI with an appointed RNTI.

11. The method according to claim 3, wherein the set of candidate unlicensed carriers is in a UE-specific form or a cell-specific form.

12. The method according to claim 3, wherein the base station transmitting information of a new unlicensed carrier selected from a set of candidate unlicensed carriers to the UE through the physical layer DCI comprises: the base station describing the new unlicensed carrier in a bitmap manner or indicating a new unlicensed carrier using a reserved bit state of a CIF bit field in the DCI.

13. The method according to claim 3, wherein the base station transmitting the information indicating the scheduling termination to the UE through the physical layer DCI comprises: defining an indication whether a scheduling process is valid in a bitmap manner in the physical layer DCI, and the base station indicating an invalid scheduling process in the licensed carrier in a bitmap manner through the physical layer DCI; or the base station presetting a pattern relationship between different processes and different transmission times of the physical layer DCI, and the base station transmitting physical layer DCI at a time corresponding to a process according to the pattern relationship to indicate that the process is invalid.

14. The method according to claim 3, wherein the base station transmitting the information indicating the scheduling termination and/or the information of a new unlicensed carrier selected from a set of candidate unlicensed carriers to the UE through the physical layer DCI comprises: the base station transmitting the information indicating the scheduling termination and/or the information of the new unlicensed carrier selected from the set of candidate unlicensed carriers in the licensed carrier in a first subframe after preemption of unlicensed carrier resources is unsuccessful; or the base station transmitting the information indicating the scheduling termination and/or the information of the new unlicensed carrier selected from the set of candidate unlicensed carriers in the licensed carrier in a predefined subframe corresponding to a UE process.

15. The method according to claim 4, wherein the scheduling termination channel is implemented by reserving Physical Hybrid ARQ Indicator Channel, PHICH, resources or physical layer DCI.

16. The method according to claim 4, wherein the base station transmitting an indication of scheduling termination and/or the signaling for indicating a scheduling update to the UE in the licensed carrier through a scheduling termination channel comprises: the base station transmitting the indication of scheduling termination and/or the signaling for indicating the scheduling update through a reserved PHICH resource.

17. The method according to claim 16, wherein the base station transmitting the indication of scheduling termination and/or the signaling for indicating the scheduling update through a reserved PHICH resource comprises: the base station transmitting the indication of scheduling termination and/or the signaling for indicating the scheduling update in the licensed carrier in the reserved PHICH resource in a first subframe time after preemption of unlicensed carrier resources is unsuccessful; or the base station transmitting the indication of scheduling termination and/or the signaling for indicating the scheduling update in the licensed carrier in a reserved PHICH resource in a predefined subframe time corresponding to a UE process.

18. The method according to claim 4, wherein the base station transmitting an indication of scheduling termination and/or the signaling for indicating the scheduling update to the UE in the licensed carrier through a scheduling termination channel comprises: the base station transmitting the indication of scheduling termination and/or the signaling for indicating the scheduling update through the physical layer DCI in the scheduling termination channel.

19. The method according to claim 18, wherein the base station transmitting the indication of scheduling termination and/or the signaling for indicating the scheduling update through the physical layer DCI in the scheduling termination channel comprises: describing information of an unlicensed carrier in which scheduling is to be terminated and/or a new unlicensed carrier in a bitmap manner; or describing the signaling for indicating the scheduling termination and/or indicating the scheduling update using a reserved bit state of a CIF bit field in the DCI; or describing the signaling for indicating the scheduling termination and/or indicating the scheduling update by setting a dedicated bit in the DCI.

20. The method according to claim 4, wherein the base station transmitting an indication of scheduling termination to the UE in the licensed carrier through a scheduling termination channel comprises: for a situation where the base station continuously transmits a plurality of UL grants of the UE in a time domain, defining an indication whether a scheduling process is valid in a bitmap manner in the physical layer DCI, and the base station indicating an invalid scheduling process in the licensed carrier in a bitmap manner through the physical layer DCI; or the base station presetting a pattern relationship between different processes and different transmission times of the physical layer DCI, and the base station transmitting physical layer DCI at a time corresponding to a process according to the pattern relationship to indicate that the process is invalid.

21. The method according to claim 4, wherein the base station transmitting an indication of scheduling termination and/or signaling for indicating the scheduling update to the UE in the licensed carrier through a scheduling termination channel comprises: the base station transmitting the indication of scheduling termination and/or the signaling for indicating the scheduling update in the licensed carrier in a first subframe after preemption of unlicensed carrier resources is unsuccessful; or the base station transmitting the indication of scheduling termination and/or the signaling for indicating the scheduling update in the licensed carrier in a predefined subframe corresponding to a UE process.

22. A method of scheduling an unlicensed carrier, comprising:
a UE receiving a signaling for indicating a scheduling termination and/or a signaling for indicating a scheduling update in a licensed carrier, and terminating data transmission in a starting scheduling resource location according to the signaling for indicating the scheduling termination, and/or transmitting data in a new scheduling resource location according to the signaling for indicating the scheduling update.

23. The method according to claim 22, wherein the UE receiving a signaling for indicating a scheduling termination and/or a signaling for indicating a scheduling update in a licensed carrier comprises: the UE acquiring information indicating the scheduling termination and/or an offset value relative to the starting scheduling resource location through physical layer Downlink Control Information, DCI, in the licensed carrier.

24. The method according to claim 22, wherein the UE receiving a signaling for indicating a scheduling termination and/or a signaling for indicating a scheduling update in a licensed carrier comprises: the UE determining termination of scheduling of an original carrier and/or acquiring information of a new unlicensed carrier through physical layer DCI in the licensed carrier.

25. The method according to claim 22, wherein the UE receiving a signaling for indicating a scheduling termination and/or a signaling for indicating a scheduling update in a licensed carrier comprises: the UE receiving an indication of scheduling termination and/or the signaling for indicating the scheduling update in a reserved PHICH resource in the licensed carrier by acquiring a parameter of the reserved PHICH resource associated with an unlicensed carrier; or acquiring the indication of scheduling termination and/or the signaling for indicating the scheduling update through physical layer DCI in a scheduling termination channel.

26. The method according to claim 23, wherein the UE acquiring the information indicating the scheduling termination and/or an offset value relative to a starting scheduling resource location through physical layer Downlink Control Information, DCI, in a licensed carrier comprises: learning termination of original scheduling and/or the offset value relative to the starting scheduling resource location according to a reserved bit state of a CIF bit field in the physical layer DCI or according to a dedicated bit set in the physical layer DCI; or
learning termination of the original scheduling and/or the offset value relative to the starting scheduling resource location according to a bitmap mapping relationship predefined in the physical layer DCI.

27. The method according to claim 23, wherein terminating data transmission in the starting scheduling resource location according to the signaling for indicating the scheduling termination comprises: for a situation where the UE corresponds to a plurality of UL grants, the UE processing the received physical layer DCI comprises at least one of:
the UE terminating all the corresponding UL grants based on the physical layer DCI indicating the scheduling termination;
the UE terminating a UL grant of a corresponding process based on an indication of a bit in the physical layer DCI; and
the UE receiving the physical layer DCI at a corresponding time based on a preset pattern relationship between processes and reception times of the physical layer DCI, and determining termination of a UL grant of a corresponding process based on the physical layer DCI.

28. The method according to claim 23, wherein the UE acquiring the information indicating the scheduling termination and/or an offset value relative to the starting scheduling resource location through physical layer DCI in the licensed carrier comprises: the UE monitoring an indication of scheduling termination and/or the offset value relative to the starting scheduling resource location during a period of time from a time when a resource grant is acquired to a transmission time determined according to a starting scheduling resource; or the UE monitoring the indication of scheduling termination and/or the offset value relative to the starting scheduling resource location in a corresponding subframe based on a predefined pattern relationship between processes and reception times of signaling.

29. The method according to claim 24, wherein the UE determining termination of scheduling of an original carrier and/or acquiring information of a new unlicensed carrier through physical layer DCI in the licensed carrier comprises: the UE determining termination of scheduling of an original carrier and/or acquiring information of a new unlicensed carrier in a bitmap manner of the physical layer DCI in a common search space using an appointed RNTI; or
the UE determining termination of scheduling of an original unlicensed carrier and/or acquiring information of a new unlicensed carrier through an indication of a reserved bit state of a CIF bit field in the physical layer DCI in a common search space using an appointed RNTI; or
the UE determining termination of scheduling of an original unlicensed carrier through an indication of a reserved bit state of a CIF field in the physical layer DCI and/or acquiring information of a new unlicensed carrier in a bitmap manner of the physical layer DCI, in a common search space using an appointed RNTI; or
the UE determining termination of scheduling of an original unlicensed carrier through an indication of a reserved bit state of a CIF field in the physical layer DCI and/or acquiring information of a new unlicensed carrier in a bitmap manner of the physical layer DCI, in a dedicated search space using a C-RNTI.

30. The method according to claim 24, wherein terminating data transmission in a starting scheduling resource location according to the signaling for indicating a scheduling termination comprises: for a situation where the UE corresponds to a plurality of UL grants, the UE processing the received physical layer DCI comprises at least one of:
the UE terminating all the corresponding UL grants based on the physical layer DCI indicating termination of scheduling of an original carrier;
the UE terminating a UL grant of a corresponding process based on an indication of a bit in the physical layer DCI; and
the UE receiving the physical layer DCI at a corresponding time based on a preset pattern relationship between processes and reception times of the physical layer DCI, and determining termination of a UL grant of a corresponding process based on the physical layer DCI.

31. The method according to claim 24, wherein the UE determining termination of scheduling of an original carrier and/or acquiring information of a new unlicensed carrier through physical layer DCI in the licensed carrier comprises: the UE monitoring the information indicating the scheduling termination and/or information of a new unlicensed carrier selected from a set of candidate unlicensed carriers during a period of time from a time when a resource grant is acquired to a transmission time determined according to a starting scheduling resource; or the UE monitoring the information indicating the scheduling termination and/or information of a new unlicensed carrier selected from a set of candidate unlicensed carriers in a corresponding subframe based on a predefined pattern relationship between processes and reception times of signaling.

32. The method according to claim 25, wherein terminating data transmission in a starting scheduling resource location according to the signaling for indicating the scheduling termination comprises: for a situation where the UE corresponds to a plurality of UL grants, the UE processing the received physical layer DCI indicating the scheduling termination comprises at least one of:
the UE terminating all the corresponding UL grants based on the physical layer DCI indicating the scheduling termination;
the UE terminating a UL grant of a corresponding process based on an indication of a bit in the physical layer DCI; and
the UE receiving physical layer DCI at a corresponding time based on a preset pattern relationship between processes and reception times of the physical layer DCI, and determining termination of a UL grant of a corresponding process based on the physical layer DCI.

33. The method according to claim 25, wherein terminating data transmission in a starting scheduling resource location according to the signaling for indicating the scheduling termination comprises: for a situation where the UE corresponds to a plurality of UL grants and an indication of scheduling termination is received through a reserved PHICH resource, the UE processing the received reserved PHICH resource comprises at least one of:
the UE terminating all the corresponding UL grants based on the reserved PHICH resource indicating the scheduling termination;
the UE terminating a UL grant of a corresponding process based on an indication of a bit in the reserved PHICH resource; and
the UE receiving a corresponding PHICH at a corresponding time based on a preset pattern relationship between processes and reception times of reserved PHICH resources, and determining termination of a UL grant of a corresponding process based on an indication of the PHICH.

34. The method according to claim 25, wherein the UE receiving the signaling for indicating the scheduling termination and/or signaling for indicating the scheduling update in a licensed carrier comprises: the UE monitoring the indication of scheduling termination and/or the signaling for indicating the scheduling update during a period of time from a time when a resource grant is acquired to a transmission time determined according to a starting scheduling resource; or the UE monitoring the indication of scheduling termination and/or the signaling for indicating the scheduling update in a corresponding subframe based on a predefined pattern relationship between processes and reception times of signaling.

35. A method of scheduling an unlicensed carrier, comprising:
a base station transmitting a signaling for indicating a scheduling termination and/or a signaling for indicating a scheduling update in a licensed carrier when determining that the signaling for indicating the scheduling termination and/or the signaling for indicating the scheduling update need to be transmitted; and
the UE receiving the signaling for indicating the scheduling termination and/or the signaling for indicating the scheduling update in the licensed carrier, and terminating data transmission in a starting scheduling resource location according to the signaling for indicating the scheduling termination, and/or transmitting data in a new scheduling resource location according to the signaling for indicating the scheduling update.

36. A base station, comprising: a determination module, and a signaling transmission module, wherein
the determination module is configured to determine that the signaling for indicating the scheduling termination and/or the signaling for indicating the scheduling update need to be transmitted, and notify the signaling transmission module; and
the signaling transmission module is configured to transmit the signaling for indicating the scheduling termination and/or signaling for indicating the scheduling update in a licensed carrier.

37. The base station according to claim 36, wherein the signaling transmission module is further configured to transmit information indicating the scheduling termination and/or an offset value relative to the starting scheduling resource location to a User Equipment, UE, in the licensed carrier; or
the signaling transmission module is further configured to select a new unlicensed carrier from a set of candidate unlicensed carriers as a carrier scheduled for the UE, and transmit the information indicating the scheduling termination and/or information of the new unlicensed carrier selected from the set of candidate unlicensed carriers to the UE in the licensed carrier; or
the signaling transmission module is further configured to transmit the indication of scheduling termination and/or the signaling for indicating the scheduling update to the UE through a scheduling termination channel in the licensed carrier.

38. A User Equipment, UE, comprising: a signaling reception module and a signaling processing module; wherein
the signaling reception module is configured to receive a signaling for indicating a scheduling termination and/or a signaling for indicating a scheduling update in a licensed carrier, and transmit the signaling for indicating the scheduling termination and/or signaling for indicating the scheduling update to the signaling processing module; and
the signaling processing module is configured to terminate data transmission in a starting scheduling resource location according to the signaling for indicating the scheduling termination and/or to transmit data in a new scheduling resource location according to the signaling for indicating the scheduling update.

39. The UE according to claim 38, wherein the signaling reception module is further configured to acquire information indicating the scheduling termination and/or an offset value relative to the starting scheduling resource location in the licensed carrier through physical layer DCI, or
the signaling reception module is further configured to determine termination of scheduling of an original carrier and/or acquire information of a new unlicensed carrier in the licensed carrier through the physical layer DCI; or
the signaling reception module is further configured to receive an indication of scheduling termination and/or the signaling for indicating the scheduling update in a reserved PHICH resource in the licensed carrier by acquiring a parameter of the reserved PHICH resource associated with an unlicensed carrier; or acquire the indication of scheduling termination and/or the signaling for indicating the scheduling update through the physical layer DCI in a scheduling termination channel.

40. A system of scheduling an unlicensed carrier, comprising: a base station, and a UE, wherein
the base station is configured to transmit a signaling for indicating a scheduling termination and/or a signaling for indicating a scheduling update in a licensed carrier when determining that the signaling for indicating the scheduling termination and/or the signaling for indicating the scheduling update need to be transmitted; and
the UE is configured to receive the signaling for indicating the scheduling termination and/or the signaling for indicating the scheduling update in the licensed carrier, and terminate data transmission in a starting scheduling resource location according to the signaling for indicating the scheduling termination, and/or transmit data in a new scheduling resource location according to the signaling for indicating the scheduling update.

41. A computer storage medium having stored therein computer-executable instructions for performing the method according to any one of claims 1-21 and claims 22-34.
